# EUROPÄISCHE PATENTSCHRIFT

(11) **EP 2 582 740 B1**
(45) Veröffentlichungstag und Bekanntmachung des Hinweises auf die Patenterteilung: **25.03.2015**
(21) Anmeldenummer: 11726123.0
(22) Anmeldetag: 14.06.2011
(51) Int. Cl.: C08G 59/40, C08L 63/00

(54) **VERWENDUNG VON CYCLISCHEN CARBONATEN IN EPOXIDHARZZUSAMMENSETZUNGEN**
USE OF CYCLIC CARBONATES IN EPOXY RESIN COMPOSITIONS
UTILISATION DE CARBONATES CYCLIQUES DANS DES COMPOSITIONS DE RÉSINES ÉPOXY

(30) Priorität: 15.06.2010 EP 10166046
(43) Veröffentlichungstag der Anmeldung: 24.04.2013
(73) Patentinhaber: BASF SE, 67056 Ludwigshafen (DE)
(72) Erfinder: KLOPSCH, Rainer, 67551 Worms (DE); LANVER, Andreas, 68199 Mannheim (DE); KAFFEE, Achim, 64653 Lorsch (DE); EBEL, Klaus, 68623 Lampertheim (DE); YU, Miran, 67065 Ludwigshafen (DE)
(86) Internationale Anmeldenummer: PCT/EP2011/059767
(87) Internationale Veröffentlichungsnummer: WO 2011/157671

(56) Entgegenhaltungen:
- EP-A1- 0 837 062
- EP-A1- 1 118 628
- EP-A1- 1 590 403
- EP-A2- 0 296 488

## Beschreibung

Die vorliegende Erfindung betrifft die Verwendung von cyclischen Carbonaten oder Mischung davon in Epoxidharzzusammensetzungen sowie Epoxidharzzusammensetzungen, die solche cyclischen Carbonate enthalten.

Als Epoxidharze (auch Epoxyharze genannt) bezeichnet man üblicherweise oligomere Verbindungen mit im Mittel mehr als einer Epoxidgruppe pro Molekül, die durch Umsetzung mit geeigneten Härtern oder durch Polymerisation der Epoxidgruppen in Duroplaste umgewandelt werden. Gehärtete Epoxidharze sind aufgrund ihrer hervorragenden mechanischen und chemischen Eigenschaften, wie hohe Schlagzähigkeit, hohe Abriebfestigkeit, gute Chemikalienbeständigkeit, insbesondere eine hohe Beständigkeit gegenüber Laugen, Säuren, Ölen und organischen Lösungsmitteln, hohe Witterungsbeständigkeit, ausgezeichnete Haftfähigkeit auf vielen Werkstoffen und hohes elektrisches Isolationsvermögen, weit verbreitet. Sie dienen als Matrix für Faserverbundwerkstoffe ("Composites") und sind oft Hauptbestandteil in Elektrolaminaten, Strukturklebstoffen, Gießharzen und Pulverlacken. Die meisten kommerziellen ungehärteten Epoxidharze werden durch Kupplung von Epichlorhydrin an Verbindungen, die wenigstens zwei reaktive Wasserstoffatome besitzen, wie Polyphenole, Mono- und Diamine, Aminophenole, heterocyclische Imide und Amide, aliphatische Diole oder Polyole oder dimere Fettsäuren, hergestellt. Epoxidharze, die sich von Epichlorhydrin ableiten, werden als Glycidyl-basierte Harze bezeichnet.

Durch Umsetzung mit Härtern werden die Epoxidharz-Präpolymer in nicht schmelzbare, dreidimensional "vernetzte", duroplastische Materialien überführt. Bei der Härtung von Epoxidharzen unterscheidet man zwischen zwei Härtungstypen. Im ersten Fall wird wenigstens eine Verbindung mit wenigstens zwei funktionellen Gruppen, welche mit den Oxiran- und/oder Hydroxygruppen der Epoxidharze-Präpolymere unter Ausbildung kovalenter Bindungen reagieren können, d. h. ein Härter, in die Epoxidharzzusammensetzung eingearbeitet. Bei Aushärten kommt es dann zur Ausbildung eines polymeren Netzwerkes aus miteinander kovalent verknüpften Epoxidharz-Präpolymeren und Härtermolekülen, wobei der Grad der Vernetzung über die relativen Mengen der funktionellen Gruppen im Härter und im Präpolymer gesteuert werden kann. Im zweiten Fall wird eine Verbindung eingesetzt, welche die Homopolymerisation der Epoxidharz-Präpolymere untereinander bewirkt. Derartige Verbindungen werden häufig auch als Initiator oder Beschleuniger bezeichnet. Initiatoren und Beschleuniger werden teilweise auch dem zusammen mit Härtern eingesetzt, um die Vernetzung zu beschleunigen.

Geeignete funktionelle Gruppen, die mit den Oxirangruppen der Epoxidharze eine Kondensationsreaktion eingehen können, sind beispielsweise Aminogruppen, Hydroxygruppen und Carboxylgruppen bzw. Derivate davon, wie Anhydride. Dementsprechend werden üblicherweise als Härter für Epoxidharze aliphatische und aromatische Polyamine, Carbonsäureanhydride, Polyamidoamine, Aminoplaste oder Phenoplaste eingesetzt. Bekannte Härter besitzen eine lineare oder höchstens schwach vernetzte Struktur. Sie sind beispielsweise in Ullmann's Encyclopedia of Industrial Chemistry, 5. Auflage auf CD-ROM, 1997, Wiley-VCH, Kapitel "Epoxy Resins" beschrieben, worauf hiermit in vollem Umfang Bezug genommen wird.

Die zur Herstellung ausgehärteter Epoxidharze eingesetzten Präpolymere weisen üblicherweise eine hohe Viskosität auf, welche die Anwendung erschwert. Zudem beschränkt die hohe Viskosität der Harze häufig den Einsatz von Füllstoffen, welche zur Modifikation der mechanischen Eigenschaften der ausgehärteten Harzmasse wünschenswert sind. Zudem erlaubt in vielen Fällen die Verwendung von Füllstoffen, die Kosten der aus den Harzen gefertigten Produkte, wie beispielsweise Formteile oder Beschichtungen zu verringern. Daher werden dem ungehärteten Epoxidharz häufig Verdünnungsmittel zugesetzt, welche die Viskosität des Harzes auf den für die Anwendung gewünschten Wert verringern.

Bei den Verdünnungsmittel unterscheidet man zwischen konventionellen Verdünnungsmitteln und Reaktivverdünnern. Konventionelle Verdünnungsmittel sind typischerweise organische Lösungsmittel, beispielsweise Ketone wie Aceton, Methylethylketon, Cyclohexanon und dergleichen, Ester aliphatischer Carbonsäuren wie Ethylacetat, Propylacetat und Butylacetat, aromatische Kohlenwasserstoff wie beispielsweise Toluol oder Xylole sowie Alkanole wie Methanol, Ethanol, n- und Isopropanol, Butanole und dergleichen. Während des Aushärtens des Epoxidharzes verdampfen Sie aus der Harzmasse. Dies führt häufig zu einer unerwünschten Volumenreduktion des Harzes (Schrumpfung) oder zur Porenbildung, was sich üblicherweise auf die mechanischen Eigenschaften des ausgehärteten Materials wie beispielsweise die Bruchfestigkeit aber auch auf die Oberflächeneigenschaften nachteilig auswirkt.

Die Nachteile der konventionellen Lösungsmittel können durch den Einsatz von Reaktivverdünnern teilweise umgangen werden. Ähnlich wie Lösungsmittel handelt es sich bei Reaktivverdünnern um niedermolekulare Substanzen, die jedoch im Unterschied zu konventionellen Lösungsmitteln funktionelle Gruppen, in der Regel Oxirangruppen, aufweisen, welche mit den Epoxidgruppen des Harzes und/oder den funktionellen Gruppen des Härters unter Ausbildung kovalenter Bindungen reagieren können. Reaktivverdünner senken ebenfalls die Viskosität des Epoxidharzes ab. Sie verdampfen während des Aushärtens nicht und werden daher während des Aushärtens kovalent in die sich bildende Harzmatrix eingebunden. Bei den für Epoxidharze geeigneten Reaktivverdünnern handelt es sich üblicherweise um mono- oder polyfunktionelle Oxirane. Beispiele für monofunktionelle Reaktivverdünner sind z. B. Glycidylether aliphatischer und cycloaliphatischer Monohydroxyverbindungen mit in der Regel 2 bis 20 C-Atomen wie z. B. Ethylhexylglycidylether sowie Glycidylesters aliphatischer oder cycloaliphatischer Monocarbonsäuren mit in der Regel 2 bis 20 C-Atomen. Beispiele für polyfunktionelle Reaktivverdünner sind insbesondere Glycidylether polyfunktioneller Alkohole mit in der Regel 2 bis 20 C-Atomen, die im Mittel typischerweise 1,5 bis 4 Glycidylgruppen aufweisen, wie 1,4-Butandioldiglycidylether, 1,6-Hexandioldiglycidylether, Diethylenglykoldiglycidylether oder Glycidylether des Trimethylolpropans. Bisher beschriebene Reaktivverdünner verbessern zwar die Viskositätseigenschaften der Epoxidharzzusammensetzungen. Vielfach verschlechtern sie aber die Härte des ausgehärteten Harzes und führen zu einer geringeren Lösungsmittelbeständigkeit. Des Weiteren ist bekannt, dass die Reaktivverdünner die Reaktivität damit formulierten Epoxidharzzusammensetzungen verringern, was längere Härtungszeiten zur Folge hat.

Im Stand der Technik werden verschiedentlich substituierte 4-Methylen-1,3-dioxolan-2-one als Vorprodukte für die Herstellung von Wirkstoffen sowie als Bestandteil von nicht-wässrigen Elektrolyten in Lithiumionenzellen beschrieben.

Die DE 1178598 beschreibt ein Verfahren zur Herstellung von wasserlöslich modifizierten Polyvinylalkoholen durch Verseifung von Copolymerisaten aus Vinylestern und 5-Methyl-4,4-dialkyl-1,3-dioxolan-2-onen und deren Verwendung als Schutzkolloid.

B. Ochiai beschreibt in Nettowaku Porima (2005), 26(3), 132-137 die radikalische Polymerisation von 4-Methylen-5,5-dimethyl-1,3-dioxolan-2-on. Die Polymerisation erfolgt sowohl über die Doppelbindung als auch unter Decarboxylierung und ergibt ein Oligomercarbonat mit Ketogruppen, welches mit aromatischen Aminen vernetzt werden kann.

Der vorliegenden Erfindung liegt die Aufgabe zu Grunde, Substanzen bereitzustellen, die als Verdünnungsmittel für Epoxidharze geeignet sind. Insbesondere sollten diese Substanzen die Nachteile der aus dem Stand der Technik bekannten Reaktivverdünner vermeiden, insbesondere im Vergleich zu konventionellen Reaktivverdünnern auf Basis von Glycidylethern die Viskosität der damit formulierten Epoxidharze verringern, ohne die mechanischen Eigenschaften und/oder die Lösungsmittelbeständigkeit der ausgehärteten Epoxidharzmassen signifikant zu verschlechtern. Außerdem ist es wünschenswert, dass die Reaktivität der damit formulierten Epoxidharzzusammensetzungen nicht signifikant verschlechtert wird.

Es wurde überraschenderweise gefunden, dass diese und weitere Aufgaben durch die im Folgenden definierten Verbindungen der allgemeinen Formel I gelöst werden. Zudem führt bereits der Zusatz geringer Mengen der Verbindungen der allgemeinen Formel I zu Epoxidharzen überraschenderweise zu einer signifikanten Erhöhung der Reaktivität der Epoxidharzzusammensetzung, erkennbar an einer geringeren Gelzeit nach Zusatz eines Härters.

Dementsprechend betrifft die vorliegende Erfindung die Verwendung von Verbindungen der allgemeinen Formel I 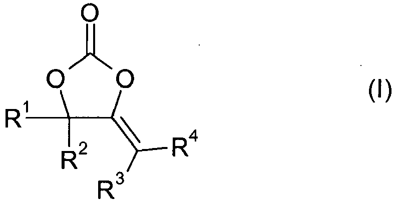 worin
- R¹ und R²: unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R¹ und R² gemeinsam für eine C₃-C₁₁-Alkylengruppe stehen;
- R³ und R⁴: unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R³ und R⁴ gemeinsam für eine C₄-C₆-Alkylengruppe stehen;
oder Gemischen davon, als Additiv in Epoxidharzzusammensetzungen.

Gegenstand der Erfindung ist weiterhin eine Epoxidharzzusammensetzung, die
a) wenigstens ein Epoxidharz als Komponente A und
b) wenigstens eine Verbindung der Formel (I) als Komponente B,
enthält.

Gegenstand der Erfindung ist außerdem die Verwendung dieser Epoxidharzzusammensetzungen als Bindemittelbestandteil in Beschichtungsmitteln, in Vergussmassen, in Kompositmaterialien, insbesondere in Kompositmaterialien auf Basis von Kohlefaser- oder Glasfasermaterialien, zur Herstellung von Pre-Pregs sowie als Strukturkleber. Gegenstände der Erfindung sind weiterhin ein Verfahren zur Aushärtung der Epoxidzusammensetzung unter Zugabe wenigstens eines Härters, insbesondere wenigstens eines aminischen Härters und ein Verfahren zur Beschichtung von Oberflächen mit der Epoxidzusammensetzung.

Im Rahmen der vorliegenden Erfindung wird der nicht weiter spezifizierte Begriff "Epoxidharz" für ungehärtete oder teilweise gehärtete Epoxidharze (Präpolymere) verwendet. Wenn er sich auf vollständig gehärtete oder modifizierte Epoxidharze oder auf epoxidharzhaltige Zusammensetzungen beziehen soll, wird das an der betreffenden Stelle präzisiert.

Werden keine anderen Angaben gemacht, so gelten im Rahmen der vorliegenden Erfindung für die im Zusammenhang mit den Substituenten R¹, R², R³ und R⁴ verwendeten Begriffe die folgenden allgemeinen Definitionen:

"C₁-C₆-Alkyl" steht für einen linearen oder verzweigten Alkylrest mit 1 bis 6 Kohlenstoffatomen. Dies sind unter anderem Methyl, Ethyl, n-Propyl, iso-Propyl, n-Butyl, 2-Butyl, iso-Butyl, tert-Butyl, n-Pentyl, 1-Methylbutyl, 2-Methylbutyl, 3-Methylbutyl, 1,1-Dimethylpropyl, 1,2-Dimethylpropyl,2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 1-Methylhexyl, 2-Methylhexyl, 3-Methylhexyl, 4-Methylhexyl, 5-Methylhexyl, 1-Ethylpentyl, 2-Ethylpentyl, 3-Ethylpentyl, 1-Propylpentyl, n-Octyl, 1-Methyloctyl, 2-Methylheptyl, 1-Ethylhexyl, 2-Ethylhexyl, 1,2-Dimethylhexyl, 1-Propylpentyl and 2-Propylpentyl.

"C₅-C₆-Cycloalkyl" steht für einen cyclischen Alkylrest mit 5 bis 6 Kohlenstoffatomen wie z. B. Cyclopentyl und Cyclohexyl.

"C₂-C₆-Alkenyl" steht für einen linearen oder verzweigten Alkenylrest mit 2 bis 6 Kohlenstoffatomen wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1 propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl, 1-Ethyl-2-methyl-2-propenyl.

"C₂-C₆-Alkinyl" steht für ein lineares oder verzweigtes Alkinyl mit 2 bis 6 Kohlenstoffatomen wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl, 1-Ethyl-1-methyl-2-propinyl.

"C₁-C₄-Alkoxy" steht für eine über ein Sauerstoff gebundene Alkylgruppe mit 1 bis 4 Kohlenstoffatomen wie z. B. Methoxy, Ethoxy, n-Propoxy, 1-Methylethoxy (Isopropoxy), Butoxy, 1-Methylpropoxy (sec-Butoxy), 2-Methylpropoxy (Isobutoxy) oder 1,1-Dimethylethoxy (tert-Butoxy).

"C₁-C₄-Alkoxy-C₁-C₄-alkyl" steht für eine wie zuvor definierte C₁-C₄-Alkoxygruppe, die in Form einer Etherbindung über den Sauerstoff an eine wie zuvor definierte C₁-C₄-Alkylgruppe gebunden ist. Beispiele sind Methoxymethyl, 2-Methoxyethyl, Ethoxymethyl, 3-Methoxypropyl, 3-Ethoxypropyl.

"Phenyl-C₁-C₄-alkyl" steht für eine Phenylgruppe, die an eine wie zuvor definierte C₁-C₄-Alkylgruppe gebunden ist. Beispiele sind Benzyl, Phenylethyl, Phenylpropyl, Phenylbutyl.

"C₃-C₁₁-Alkylen" steht für ein Alkandiyl mit 3 bis 11 Kohlenstoffatomen. Beispiele sind n-Propandiyl, n-Butandiyl, n-Pentandiyl, n-Hexandiyl, n-Heptandiyl, n-Octandiyl, n-Nonandiyl, n-Decandiyl, n-Undecandiyl, Methylpropandiyl, Methylbutandiyl, Methylpentandiyl, Methylhexandiyl, Methylheptandiyl, Methyloctandiyl, Methylnonandiyl, Methyldecandiyl, Dimethylpropandiyl, Dimethylbutandiyl, Dimethylpentandiyl, Dimethylhexandiyl, Dimethylheptandiyl, Dimethyloctandiyl, Dimethylnonandiyl.

Im Hinblick auf die erfindungsgemäße Verwendung sind die Verbindungen der Formel (I) bevorzugt, worin die Reste R¹, R², R³ und R⁴ unabhängig von einander eine oder mehrere der folgenden Bedeutungen aufweisen:
- R¹: ist ausgewählt unter Wasserstoff, C₁-C₆-Alkyl, insbesondere C₁-C₄-Alkyl, besonders bevorzugt Methyl, Ethyl, n-Propyl und iso-Propyl, insbesondere Methyl und Ethyl, C₁-C₄-Alkoxy-C₁-C₄-alkyl, C₅-C₆-Cycloalkyl, insbesondere Cyclohexyl, Phenyl, Phenyl-C₁-C₄-alkyl, insbesondere Benzyl, C₂-C₆-Alkenyl und C₂-C₆-Alkinyl;
- R²: ist ausgewählt unter Wasserstoff, C₁-C₆-Alkyl, insbesondere C₁-C₄-Alkyl, besonders bevorzugt Methyl, Ethyl, n-Propyl und iso-Propyl, speziell Methyl oder Ethyl, C₁-C₄-Alkoxy-C₁-C₄-alkyl, C₅-C₆-Cycloalkyl, insbesondere Cyclohexyl, Phenyl, Phenyl-C₁-C₄-alkyl, insbesondere Benzyl, C₂-C₆-Alkenyl und C₂-C₆-Alkinyl;
- R¹ und R²: können auch gemeinsam für eine C₃-C₁₁-Alkylengruppe, bevorzugt eine C₄-C₆-Alkylengruppe, wie beispielsweise 1,4-Butandiyl, 1,5-Pentandiyl oder 1,6-Hexandiyl, insbesondere eine lineare C₅-Alkylengruppe (1,5-Pentandiyl) stehen;
- R³: ist ausgewählt unter Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl und C₂-C₆-Alkinyl. Bevorzugt ist R³ Wasserstoff;
- R⁴: ist ausgewählt unter Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl und C₂-C₆-Alkinyl. Bevorzugt ist R⁴ Wasserstoff;
- R³ und R⁴: können auch gemeinsam für eine C₄-C₆-Alkylengruppe, wie beispielsweise 1,4-Butandiyl, 1,5-Pentandiyl oder 1,6-Hexandiyl, stehen.

In bevorzugten Verbindungen der Formel I steht bzw. stehen wenigstens einer der Reste R³ und R⁴, insbesondere beide Reste R³ und R⁴, für Wasserstoff.

Bevorzugt ist die Verwendung einer Verbindung der Formel I, in der wenigstens einer der Reste R¹, R², R³ und R⁴ verschieden von Wasserstoff ist. Insbesondere ist wenigstens einer der Reste R¹ und/oder R² von Wasserstoff verschieden und wenigstens einer der Reste R³ und R⁴, insbesondere beide Reste R³ und R⁴, stehen für Wasserstoff.

Im Hinblick auf die erfindungsgemäße Verwendung sind die Verbindungen der Formel (I) besonders bevorzugt, worin die Reste R¹ und R² die folgenden Bedeutungen aufweisen, wobei die Reste R³ und R⁴ die zuvor angegebenen Bedeutungen aufweisen und vorzugsweise einer der Reste R³ oder R⁴ für Wasserstoff steht und insbesondere beide Reste R³ und R⁴ für Wasserstoff stehen:
- R¹: ist ausgewählt unter Wasserstoff und C₁-C₄-Alkyl, insbesondere Wasserstoff, Methyl oder Ethyl;
- R²: ist ausgewählt unter C₁-C₄-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl und C₂-C₆-Alkinyl, insbesondere unter C₁-C₄-Alkyl und C₁-C₄-Alkoxy-C₁-C₄-alkyl und speziell unter Methyl oder Ethyl;

In einer besonders bevorzugten Ausführungsform der Erfindung stehen R¹ und R² jeweils für C₁-C₄-Alkyl, insbesondere für Methyl oder Ethyl. In dieser besonders bevorzugten Ausführungsform weisen die Reste R³ und R⁴ die zuvor angegebenen Bedeutungen auf, wobei vorzugsweise einer der Reste R³ oder R⁴ für Wasserstoff steht und insbesondere beide Reste R³ und R⁴ für Wasserstoff stehen.

In einer ebenfalls besonders bevorzugten Ausführungsform der Erfindung stehen R¹ und R² gemeinsam für eine C₄-C₆-Alkylengruppe, wie beispielsweise 1,4-Butandiyl, 1,5-Pentandiyl oder 1,6-Hexandiyl, insbesondere eine lineare C₅-Alkylengruppe (1,5-Pentandiyl). In dieser besonders bevorzugten Ausführungsform weisen die Reste R³ und R⁴ die zuvor angegebenen Bedeutungen auf, wobei vorzugsweise einer der Reste R³ oder R⁴ für Wasserstoff steht und insbesondere beide Reste R³ und R⁴ für Wasserstoff stehen.

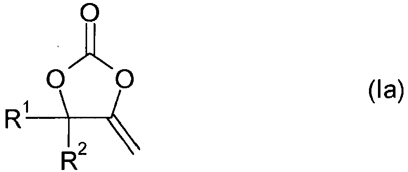

Bevorzugt sind Verbindungen der allgemeinen Formel la in denen R¹ und R² eine der oben gegebenen Bedeutungen aufweisen und deren Gemische. Besonders bevorzugt sind Verbindungen der allgemeinen Formel la, in denen R¹ und R² die in Tabelle 1 beschriebenen Bedeutungen zeigen.

**Tabelle 1: Beispiele erfindungsgemäßer Verbindungen der Formel la**

| Nr. | R¹ | R² |
|---|---|---|
| 1 | Methyl | Phenyl |
| 2 | Methyl | H |
| 3 | Methyl | Methyl |
| 4 | Methyl | n-Propyl |
| 5 | Methyl | iso-Propyl |
| 6 | Methyl | n-Butyl |
| 7 | Methyl | iso-Butyl |
| 8 | Ethyl | H |
| 9 | Ethyl | Methyl |
| 10 | Ethyl | Ethyl |
| 11 | Ethyl | iso-Propyl |
| 12 | Ethyl | n-Butyl |
| 13 | n-Butandiyl | |
| 14 | n-Pentandiyl | |
| 15 | n-Heptandiyl | |
| 16 | n-Undecandiyl | |
| 17 | H | H |
| 18 | H | Methyl |
| 19 | H | n-Propyl |
| 20 | H | iso-Propyl |
| 21 | H | n-Butyl |
| 22 | H | iso-Buty |
| 23 | H | Phenyl |

Hierunter sind besonders die folgenden Verbindungen und deren Gemische bevorzugt:
- 4,4-Diethyl-5-methylen-1,3-dioxolan-2-on
- 4,4-Dimethyl-5-methylen-1,3-dioxolan-2-on
- 4-Methyl-5-methylen-1,3-dioxolan-2-on
- 4-Ethyl-5-methylen-1,3-dioxolan-2-on
- 4-Ethyl-4-methyl-5-methylen-1,3-dioxolan-2-on
- 4-Isopropyl-5-methylen-1,3-dioxolan-2-on
- 4-Isopropyl-4-methyl-5-methylen-1,3-dioxolan-2-on
- 4-Methylen-1,3-dioxa-spiro[4.5]decan-2-on
- 4-Phenyl-4-methyl-5-methylen-1,3-dioxolan-2-on
- 4-n-Propyl-5-methylen-1,3-dioxolan-2-on
- 4-n-Propyl-4-methyl-5-methylen-1,3-dioxolan-2-on
- 4-Methylen-1,3-dioxolan-2-on

Die erfindungsgemäß verwendeten Verbindungen der Formeln I bzw. la, die im Folgenden auch als exo-Vinylencarbonate bezeichnet werden, sind grundsätzlich aus dem Stand der Technik bekannt, beispielsweise aus DE 1098953, DE 3433403, EP 837062, JP 2006-137733, JP 2008222619, J. Org. Chem. 2007, 72, 647-649; Angew. Chem. 2009, 121, 4258-4261; Eur. J. Org. Chem. 2007, 2604-2607; Eur. J. Org. Chem. 2008, 2309-2312; Org. Lett. 2006, 8, 515-518.

Verbindungen der Formel I, worin wenigstens einer der beiden Reste R³, R⁴ für Wasserstoff steht (im Folgenden auch Verbindungen Ib), können beispielsweise durch Umsetzung von ggf. substituierten Propargylalkoholen der Formel II mit CO₂ in Gegenwart eines Katalysators hergestellt werden. In Formeln Ib und II besitzen R¹ und R² die zuvor angegebenen Bedeutungen und R' weist eine der für R³ oder R⁴ angegebenen Bedeutungen auf.

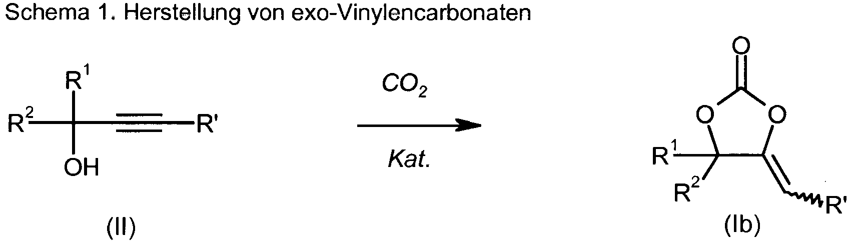

Als Katalysatoren kommen grundsätzlich Übergangsmetallkatalysatoren in Frage, die als aktives Metall beispielsweise Silber, Kupfer, Gold, Palladium oder Platin enthalten, z. B. Silbersalze wie Silberacetat, Silbercarbonat, Kupfer(II)-Salze wie Kupferacetat oder Kupfer(I)halogenide wie Cul, CuBr, CuCl, weiterhin Palladium(0)-Katalysatoren, wobei die vorgenannten Übergangsmetall-Verbindungen gegebenenfalls in Kombination mit einem organischen Amin, z. B. einem Tri-C₁-C₆-alkylamin wie Triethylamin oder einer Amidin-Base wie Diazabicyclo[4.3.0] nonen (DBN) oder Diazabicyclo[5.4.0]undecen (DBU) oder mit einem organischen Phosphin z. B. Trialkylphosphine oder Triarylphosphine wie Tributylphosphin und Triphenylphosphin oder in Kombination mit einer Mischung aus einem der vorgenannten Phosphine mit einem Ammoniumsalz wie beispielsweise Tri-C₁-C₆-alkylammoniumhalogeniden oder Tetra-C₁-C₆-alkylammoniumhalogeniden eingesetzt werden können. Als Katalysatoren kommen weiterhin organische Phosphine als solche, z. B. Trialkylphosphine oder Triarylphosphine wie Tributylphosphin oder Triphenylphosphin, sowie sterisch gehinderte Carbene, z. B. 1,3-substiuierte 2,3-Dihydroimidazol-2-yliden-Verbindungen wie 1,3-Diisopropyl-2,3-dihydro-4,5-imidazol-2-yliden oder deren CO₂-Addukte sowie Kombinationen davon mit den vorgenannten Phosphinen in Betracht. Die Reaktion kann drucklos oder vorzugsweise unter erhöhtem Druck, z. B. bei 50 bis 500 Bar oder in überkritischem CO₂, durchgeführt werden. Bezüglich der Reaktionsbedingungen wird auf die zuvor genannte Literatur verwiesen.

Anstelle von CO₂ kann auch ein Carbonsäureanhydrid wie beispielsweise Bis-(tert.-Butyl)dikohlensäureanhydrid (Boc₂O) eingesetzt werden. In diesem Fall erfolgt die Umsetzung üblicherweise in zwei Stufen, wobei man in der ersten Stufe die Verbindung II mit einem Ester des Biskohlensäureanhydrids, z. B. mit Boc₂O, in Gegenwart einer Base, beispielsweise Natriumhydrid, umsetzt und den dabei erhaltenen Ester in Gegenwart eines Übergangsmetallkatalysators, z. B. eines goldhaltigen Katalysators cyclisiert. Eine derartige Vorgehensweise ist beispielsweise in Org. Lett. 2006, 8, 515-518 beschrieben, auf die hiermit Bezug genommen wird.

Verbindungen der Formel I, in denen einer oder beide Reste R³ bzw. R⁴ für einen von Wasserstoff verschiedenen Rest stehen, können ausgehend von Verbindungen der Formel I, worin beide Reste R³ und R⁴ für Wasserstoff stehen (Verbindungen la bzw. Ib), durch Heck-Kupplung, beispielsweise in Analogie zu der in Tetrahedron Lett. 2000, 5527-5531 beschriebenen Methode, hergestellt werden.

Erfindungsgemäß werden die Verbindungen der Formel I in Epoxidharzzusammensetzungen verwendet. Neben einer verdünnenden Wirkung, d. h. einer Herabsetzung der Viskosität, tritt auch eine signifikante Erhöhung der Reaktivität der Epoxidharzzusammensetzungen, insbesondere bei aminischer Härtung, auf. In der Regel zeigt sich der gewünschte Verdünnungseffekt aber auch die erhöhte Reaktivität bereits bei einem Zusatz geringer Mengen der Verbindung der Formeln I bzw. la oder Ib oder eine Gemischs von Verbindungen der Formeln I bzw. la oder Ib zu einer konventionellen Epoxidharzzusammensetzung. In der Regel wird man die Verbindung(en) der Formeln I bzw. la oder Ib in einer Gesamtmenge von wenigstens 0,001 Gewichtsteilen, häufig wenigstens 0,005 Gewichtsteilen, insbesondere wenigstens 0,01 Gewichtsteilen, bezogen auf 1 Gewichtsteil der Epoxidharzkomponente A, verwenden. Häufig wird man die Verbindung(en) der Formeln I bzw. la oder Ib in einer Gesamtmenge von höchsten 1 Gewichtsteil, vorzugsweise höchstens 0,7 Gewichtsteilen, insbesondere höchstens 0,5 Gewichtsteilen, bezogen auf 1 Gewichtsteil der Epoxidharzkomponente, verwenden.

In den erfindungsgemäßen Epoxidharzzusammensetzungen beträgt dementsprechend die Gesamtmenge an Verbindungen der Formeln I bzw. la oder Ib in der Regel 0,1 Gew.-% bis 50 Gew.-%, häufig 0,5 bis 40 Gew.-% und insbesondere 1 bis 30 Gew.-%, bezogen auf die Gesamtmenge an Verbindungen der Formeln I bzw. la oder Ib plus Epoxidharzkomponente A.

Als Komponente A der erfindungsgemäßen Epoxidharzzusammensetzungen können grundsätzlich alle Epoxidgruppen aufweisende Substanzen eingesetzt werden, die üblicherweise in härtbaren Epoxidharzzusammensetzungen eingesetzt werden. In Betracht kommen insbesondere Epoxyverbindungen mit 1 bis 10 Epoxygruppen, vorzugsweise mit mindestens zwei Epoxygruppen im Molekül. Der Gehalt an EpoxidGruppen in typischen Substanzen der Komponente A liegt üblicherweise im Bereich von 120 bis 3000 g/Äquivalent, gerechnet als sogenanntes Epoxidäquivalent gemäß DIN 16945.

Hierunter bevorzugt sind sogenannte Glycidyl-basierte Epoxidharze, insbesondere solche, die durch Veretherung aromatischer, aliphatischer oder cycloaliphatischen Polyole mit Epichlorhydrin hergestellt werden. Derartige Substanzen werden häufig auch als Polyglycidylether von aromatischen, bzw. als Polyglycidylether von aliphatischen oder cycloaliphatischen Polyolen bezeichnet.

Bei den Epoxidharzen der Komponente A kann es sich um Flüssigharze, um Festharze oder um Mischungen davon handeln. Flüssigharze unterscheiden sich von Festharzen durch geringere Viskosität. Zudem weisen Flüssigharze in der Regel einen höheren Anteil an Epoxidgruppen und dementsprechend ein niedrigeres Epoxidäquivalent auf.

Der Gehalt an Epoxidgruppen in typischen Flüssigharzen der Komponente A liegt üblicherweise im Bereich von 120 bis 200 g/Äquivalent und der der Festharze im Bereich von 450-3000 g/Äquivalent, gerechnet als sogenanntes Epoxidäquivalent gemäß DIN 16945.

Die Viskosität der Flüssigharze der Komponente A liegt bei 25 °C üblicherweise im Bereich von 1 bis 20 Pas, bevorzugt im Bereich von 5 bis 15 Pas. Die Viskosität der der Festharze liegt bei 25 °C üblicherweise im Bereich 5 bis 40 Pas, bevorzugt im Bereich von 20 bis 40 Pas. Die hier angegebenen Viskositäten sind die gemäß DIN 53015 bei 25 °C als 40%ige Lösungen der Harze in Methylethylketon bestimmten Werte.

Geeignete Epoxidharze sind beispielsweise die unter EPILOX®, EPONEX®, EPIKOTE®, EPONOL®, D.E.R, ARALDITE oder ARACAST im Handel erhältlichen Produkte, z. B. EPILOX A 17-00, A 17-01, A 18-00, A 19-00, A 19-01, A 19-02, A 19-03, A 19-04, F 17-00, T 19-27, AF 18-50, AF 18-30, F 16-01, P 22-00 der Fa. Leuna-Harze GmbH, Epon Resin 825, 826, 828, 830, 834, 862, 863, 813, 815C, 824, 872, 8131, 8132, 8201, 8280, 8281, CS-241, CS 377 der Fa. Hexion, D.E.R 640, 642U, 671, 662, 663U, 664, 667, 672U der Firma Dow sowie Araldit® GT 6063, 6064, 6084, 6097, 7004, 7220, 7225, 7072, 7097, 7203, 7220 und 7304 der Firma Huntsman.

In einer bevorzugten Ausführungsform der Erfindung ist die Epoxidharz-Komponente A unter Polyglycidethern aromatischer Polyole ausgewählt. Beispiele hierfür sind die vom Diglycidylether des Bisphenols A abgeleitetenen Harze (DGEBA-Harze, R' = CH₃) und die vom Bisphenol F abgeleiteten Harze (R' = H), welche sich durch die folgende allgemeine Formel beschreiben lassen: 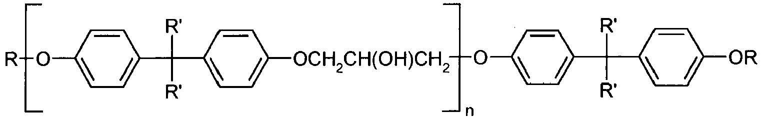 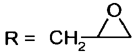 R' = H oder CH₃

In der Formel gibt der Parameter n die Anzahl der Wiederholungseinheiten an, wobei der Mittelwert von n mit dem jeweiligen mittleren Molekulargewicht korrespondiert.

Beispiele für Epoxidharze auf Basis von Polyglycidylethern aromatischer Polyole sind weiterhin Glycidylether von Phenol- und Kresol-basierten Novolaken. Novolake werden durch die säurekatalysierte Kondensation von Formaldehyd und Phenol oder Kresol hergestellt. Durch Umsetzung der Novolake mit Epichlorhydrin erhält man die Glycidylether der Novolake.

In einer anderen bevorzugten Ausführungsform der Erfindung ist die Epoxidharz-Komponente A unter Polyglycidylethern cycloaliphatischer Polyole und den Polyglycidylestern cycloaliphatischer Polycarbonsäuren ausgewählt. Beispiele für Polyglycidylether von cycloaliphatischen Polyolen sind die Kernhydrierungsprodukte von Polyglycidylethern auf Basis von Bisphenol-A, die Kernhydrierungsprodukte von Polyglycidylethern auf Basis von Bisphenol-F, die Kernhydrierungsprodukte von Polyglycidylethern auf Basis von Novolaken und deren Gemische. Derartige Verbindungen werden üblicherweise durch selektive Hydrierung der aromatischen Ringe in den zuvor genannten aromatischen Polyglycidylethern hergestellt. Beispiele für solche Produkte sind das P 22-00 der Fa. LeunaHarze und Eponex 1510 der Fa. Hexion. Beispiele für Polyglycidylester von cycloaliphatischen Polycarbonsäuren ist Hexahydrophthalsäurediglycidylester

Als Epoxidharze A für die erfindungsgemäßen Lackformulierungen sind auch epoxidgruppenhaltige Polyacrylatharze geeignet. Diese werden in der Regel durch Copolymerisation von mindestens einem ethylenisch ungesättigten Monomer, das mindestens eine Epoxidgruppe, insbesondere in Form einer Glycidylethergruppe, im Molekül enthält, mit mindestens einem weiteren ethylenisch ungesättigten Monomer, das keine Epoxidgruppe im Molekül enthält, hergestellt, wobei vorzugsweise wenigstens eines der Comonomere ein Ester der Acrylsäure oder Methacrylsäure ist. Beispiele für die ethylenisch ungesättigte Monomere, die mindestens eine Epoxidgruppe im Molekül enthalten, sind Glycidylacrylat, Glycidylmethacrylat und Allylglycidylether. Beispiele für ethylenisch ungesättigte Monomere, die keine Epoxidgruppe im Molekül enthalten, sind Alkylester der Acryl und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat. Weitere Beispiele für ethylenisch ungesättigte Monomere, die keine Epoxidgruppen im Molekül enthalten, sind Säuren, wie z. B. Acrylsäure und Methacrylsäure. Säureamide, wie z. B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z. B. Vinylacetat und hydroxylgruppenhaltige Monomere, wie z. B. Hydroxyethylacrylat und Hydroxyethylmethacrylat. Das epoxidgruppenhaltige Polyacrylatharz weist üblicherweise ein Epoxidäquivalentgewicht von 400 bis 2500, vorzugsweise 500 bis 1500, besonders bevorzugt 600 bis 1200 auf. Das zahlenmittlere Molekulargewicht (gelpermeationschromatographisch unter Verwendung eines Polystyrolstandards bestimmt) liegt typischerweise im Bereich von 1000 bis 15 000, vorzugsweise von 1200 bis 7000, besonders bevorzugt von 1500 bis 5000. Die Glasübergangstemperatur (TG) liegt typischerweise im Bereich von 30 bis 80 °C, vorzugsweise von 40 bis 70 °C, besonders bevorzugt von 50 bis 70 °C (gemessen mit Hilfe der Differentialkalorimetrie (DSC)). Epoxidgruppenhaltige Polyacrylatharze sind bekannt (vgl. z. B. EP-A-299 420, DE-B-22 14 650, DE-B-27 49 576, US-A-4,091,048 und US-A-3,781,379). Beispiele für solche Harze sind Epon 8021, Epon 8111, Epon 8161 der Fa. Hexion.

Die Epoxidharze der Komponente A können sich auch von anderen Epoxiden ableiten (Nichtglycidylether-Epoxidharze). Hierzu zählen insbesondere Verbindungen, einschließlich Oligomeren und Polymeren, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind. Beispiele für die Epoxidierungsprodukte von Verbindungen mit wenigstens einer cycloolefinischen Gruppe sind 4-Epoxyethyl-1,2-epoxycyclohexan und die Verbindung der folgenden Formel: 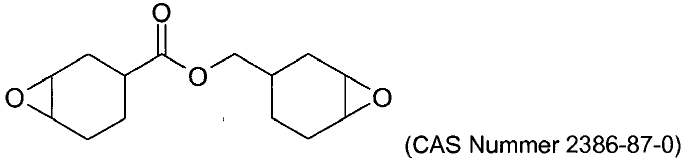 die beispielsweise von der Fa. Cytec unter der Bezeichnung Uvacure 1500 vertrieben wird. Bevorzugt werden die Verbindungen eingesetzt, die wenigstens eine, insbesondere mehrere epoxidierte cycloaliphatische Gruppen, insbesondere 7-Oxabicyclo-[4.1.0]-heptyl-Gruppen aufweisen, die durch Epoxidierung von Verbindungen mit Cyclohexenylgruppen erhältlich sind, und deren Oligomere nicht alleine sondern in Kombination mit einer oder mehrerer der vorgenannten Substanzen, die wenigstens zwei Glycidylethergruppen im Molekül aufweisen.

Neben den Epoxidharzen der Komponente A und den Verbindungen der Formel I können die Epoxidharzzusammensetzungen auch konventionelle Reaktivverdünner enthalten. Hierunter versteht man vor allem niedermolekulare Verbindungen mit einem Molekulargewicht von vorzugsweise maximal 250 Dalton, z. B. im Bereich von 100 bis 250 Dalton, die Oxirangruppen, vorzugsweise Glycidylgruppen, z. B. in Form von Glycidylethergruppen, Gylcidylestergruppen oder Glycidylamidgruppen, aufweisen. Die Epoxid-Funktionalität, d. h. die Zahl der Epoxidgruppen pro Molekül liegt bei den Reaktivverdünnern typischerweise im Bereich von 1 bis 3, insbesondere im Bereich von 1,2 bis 2,5. Hierunter bevorzugt sind insbesondere Glycidylether von aliphatischen oder cycloaliphatischen Alkoholen, die vorzugsweise 1, 2, 3 oder 4 OH-Gruppen und 2 bis 20 bzw. 4 bis 20 C-Atome aufweisen, sowie Glycidylether von aliphatischen Polyetherolen, die 4 bis 20 C-Atome aufweisen. Beispiele hierfür sind:
- Glycidylether von gesättigten Alkanolen mit 2 bis 20 C-Atomen, wie beispielsweise C₂-C₂₀-Alkylglycidylether wie 2-Ethylhexylglycidylether;
- Glycidylether von gesättigten Alkanpolyolen mit 2 bis 20 C-Atomen, z. B. die Glycidylether von 1,4-Butandiol, 1,6-Hexandiol, Trimethylolpropan oder von Pentaerythritol, wobei die vorgenannten Glycidylether-Verbindungen in der Regel eine Epoxid-Funktionalität im Bereich von 1 bis 3,0 und vorzugsweise im Bereich von 1,2 bis 2,5 aufweisen;
- Glycidylether von Polyetherolen mit 4 bis 20 C-Atomen, beispielsweise Glycidylether von Diethylenglykol, Triethylenglykol, Tetraethylenglykol, Dipropylenglykol oder Tripropylenglykol;
- Glycidylether von cycloaliphatischen Alkoholen mit 5 bis 20 C-Atomen wie beispielsweise Bisglycidylether von Cyclohexan-1,4-diyl, der Bisglycidylether von kernhydriertem Bisphenol A oder von kernhydriertem Bisphenol F,
- Glycidylether von Polyalkylenoxiden mit 2 bis 4 C-Atomen wie Polyethylenoxid oder Polypropylenoxid;
und Gemische der vorgenannten Substanzen.

Sofern erwünscht, werden die konventionellen Reaktivverdünner in den erfindungsgemäßen Formulierungen in einer Gesamtmenge von wenigstens 0,01 Gewichtsteilen, häufig wenigstens 0,02 Gewichtsteilen, insbesondere wenigstens 0,05 Gewichtsteilen, bezogen auf 1 Gewichtsteil der Epoxidharzkomponente A, verwendet. Da die Verbindungen der Formel I die durch konventionelle Reaktivverdünner häufig bewirkte Herabsetzung der Reaktivität ausgleichen oder sogar überkompensieren, können die konventionellen Reaktivverdünner in größerer Menge eingesetzt werden als im Stand der Technik. In der Regel wird man jedoch die konventionellen Reaktivverdünner in einer Gesamtmenge von höchstens 1 Gewichtsteil, vorzugsweise höchstens 0,8 Gewichtsteilen, insbesondere höchstens 0,7 Gewichtsteilen, bezogen auf 1 Gewichtsteil der Epoxidharzkomponente, verwenden. Vorzugsweise wird die Gesamtmenge an konventionellem Reaktivverdünner plus Verbindung der Formel I nicht mehr als 1,1 Gewichtsteile, insbesondere nicht mehr als 1 Gewichtsteil und speziell nicht mehr als 0,9 Gewichtsteile, bezogen auf 1 Gewichtsteil der Epoxidharzkomponente A betragen. Sofern die erfindungsgemäßen Epoxidharzzusammensetzungen einen oder mehrere konventionelle Reaktivverdünner enthalten, liegt das Gewichtsverhältnis von Verbindung der Formel I zu konventionellem Reaktivverdünner üblicherweise in einem Bereich von 1 : 100 bis 100 : 1, insbesondere im Bereich von 1 : 50 bis 50 : 1.

Insbesondere wird der konventionelle Reaktivverdünner nicht mehr als 10 Gew.-%, bezogen auf die Gesamtmenge an Reaktivverdünner + Verbindung I ausmachen. In einer anderen Ausführungsform der Erfindung liegt das Gewichtsverhältnis von Verbindung I zu konventionellem Reaktivverdünner im Bereich von 1 : 10 bis 10 : 1, insbesondere im Bereich von 1 : 5 bis 5 : 1 und speziell im Bereich von 1 : 2 bis 2 : 1.

Neben der Verbindung I und der Epoxidharzkomponente A sowie gegebenenfalls einem oder mehreren konventionellen Reaktivverdünnern als Komponente C können die erfindungsgemäßen Epoxidharzzusammensetzungen konventionelle organische Verdünnungsmittel enthalten. Hierunter versteht man organische Lösungsmittel, die bei Normaldruck einen Siedepunkt unterhalb 200 °C aufweisen und die mit den Epoxidgruppen und den Gruppen eines gegebenenfalls vorhandenen Reaktivverdünners keine Reaktion unter Bindungsbildung eingehen. Konventionelle Verdünnungsmittel sind typischerweise organische Lösungsmittel, beispielsweise Ketone mit vorzugsweise 3 bis 8 C-Atomen wie Aceton, Methylethylketon, Cyclohexanon und dergleichen, Ester aliphatischer Carbonsäuren, vorzugsweise der Essigsäure, der Propionsäure oder der Butansäure, insbesondere die C₁-C₆-Alkylester dieser Säuren wie Ethylacetat, Propylacetat und Butylacetat, aromatische Kohlenwasserstoff insbesondere Alkylaromaten wie beispielsweise Toluol, Mesitylen, 1,2,4-Trimethylbenzol, n-Propylbenzol, Isopropylbenzol, Cumol, oder Xylole und Mischungen von Alkylaromaten, insbesondere technische Gemische wie sie beispielsweise als Solvessomarken im Handel erhältlich sind, aliphatische und cycloaliphatische Kohlenwasserstoffe sowie Alkanole mit vorzugsweise 1 bis 8 C-Atomen und Cycloalkanole mit vorzugsweise 5 bis 8 C-Atomen wie Methanol, Ethanol, n- und Isopropanol, Butanole, Hexanole, Cyclopentanol und Cyclohexanol und dergleichen.

In einer bevorzugten Ausführungsform enthält die Zusammensetzung Lösemittel allenfalls in untergeordneten Mengen (weniger als 20 Gew.-%, insbesondere weniger als 10 Gew.-% oder weniger als 5 Gew.-%, bezogen auf die Gesamtmenge an Epoxidharzkomponente A + C und Verbindung der Formel I) und besonders bevorzugt kein Lösemittel (100 % System).

Neben den vorgenannten Bestandteilen kann die Epoxidharzzusammensetzung die hierfür üblichen Füllstoffe und/oder Additive enthalten.

Geeignete Füllstoffe sind beispielsweise anorganische oder organische partikelförmige Materialien wie beispielsweise Calciumcarbonate und Silikate sowie anorganische Fasermaterialien wie beispielsweise Glasfaser. Auch organische Füllstoffe wie Kohlefaser und Mischungen aus organischen und anorganischen Füllstoffen, wie beispielsweise Mischungen aus Glas- und Kohlefasern oder Mischungen aus Kohlefasern und anorganischen Füllstoffen können Anwendung finden. Die Füllstoffe können in einer Menge von 1 bis 70 Gew.-%, bezogen auf das Gesamtgewicht der Zusammensetzung, zugesetzt werden.

Geeignete herkömmliche Additive umfassen beispielsweise Antioxidantien, UV-Absorber/Lichtstabilisatoren, Metalldeaktivatoren, Antistatika, Verstärkungsstoffe, Füllstoffe, Antifoggingmittel, Treibmittel, Biozide, Weichmacher, Gleitmittel, Emulgatoren, Farbmittel, Pigmente, Rheologiemittel, Schlagzähigkeitsverbesserer, Katalysatoren, Adhäsionsregulatoren, optische Aufheller, Flammschutzmittel, Antitropfmittel, Nukleierungsmittel, Lösungsmittel und Reaktivverdünner sowie Gemische davon.

Die gegebenenfalls verwendeten Lichtstabilisatoren / UV-Absorber, Antioxidantien und Metalldeaktivatoren weisen vorzugsweise eine hohe Migrationsstabilität und Temperaturbeständigkeit auf. Sie sind beispielsweise aus den Gruppen a) bis t) ausgewählt. Die Verbindungen der Gruppen a) bis g) und i) stellen Lichtstabilisatoren/UV-Absorber dar, während Verbindungen j) bis t) als Stabilisatoren wirken.
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen,
s) Polyamidstabilisatoren, und
t) basische Costabilisatoren.

Die Wahl geeigneter herkömmlicher Additive für die erfindungsgemäße Zusammensetzung hängt vom jeweiligen Verwendungszweck der gehärteten Epoxidharze ab und kann im Einzelfall vom Fachmann bestimmt werden.

Die Aushärtung der erfindungsgemäßen Epoxidharzzusammensetzungen erfolgt üblicherweise mittels geeigneter Härter, die in der Regel kurz vor der Härtung zugegeben werden. In einer erfindungsgemäß bevorzugten Ausgestaltung handelt es sich bei der Epoxidharzzusammensetzung um ein sogenanntes 2-K System, das durch Zugabe eines Vernetzers ausgehärtet wird. Mit anderen Worten, derartige Epoxidharzzusammensetzungen sind im Wesentlichen frei von Härtern und werden erst durch Zusatz eines Härters ausgehärtet. Im Wesentlichen frei von Härtern bedeutet, dass Menge an Härter weniger als 10 %, bevorzugt weniger als 5 %, insbesondere weniger als 1 % der zur Aushärtung benötigten Menge an Härter beträgt. Im Wesentlichen frei von Härtern bedeutet insbesondere, dass die Menge an Härter weniger als 5 Gew.-%, bevorzugt weniger als 1 Gew.-%, insbesondere weniger als 0, 5 %, bezogen auf das Gesamtgewicht der erfindungsgemäßen Epoxidharzzusammensetzung, beträgt.

Die zur Aushärtung benötigte Menge an Härter bestimmt sich in an sich bekannter Weise über die Anzahl der Epoxidgruppen in der Formulierung und die Anzahl der funktionellen Gruppen im Härter. Die Anzahl der Epoxidgruppen im Epoxidharz wird als sogenanntes Epoxidäquivalent angegeben. Das Epoxidäquivalent wird gemäß DIN 16945 bestimmt.

Die Anzahl der reaktiven Gruppen im Härter wird im Falle der erfindungsgemäß bevorzugten Aminhärter über die Aminzahl gemäß DIN 16945 berechnet.

Die erfindungsgemäßen Epoxidharzzusammensetzungen können auch einen oder mehrere geeignete Katalysatoren für die Aushärtung enthalten, die sich in bekannter Weise nach der Art der reaktiven funktionellen Gruppen im Bindemittel richten.

Geeignete Katalysatoren für die Aushärtung der Epoxidharz-Formulierungen sind Phosphoniumsalze organischer oder anorganischer Säuren, Imidazol und Imidazolderivate, quartäre Ammoniumverbindungen sowie Amine. Die Katalysatoren werden, sofern erwünscht, in Anteilen von 0,01 Gew.-% bis etwa 10 Gew.-%, bezogen auf das Gesamtgewicht des Epoxidharzes, der Verbindung I und Härter eingesetzt. In einer bevorzugten Ausgestaltung werden keine Katalysatoren benötigt, d. h. der Gehalt an Katalysatoren in der Zusammensetzung beträgt weniger als 0,01 Gew.-%.

Gegenstand der Erfindung ist auch ein Verfahren zur Aushärtung der erfindungsgemäßen Epoxidharzzusammensetzung, welches die Umsetzung der Epoxidharzzusammensetzung mit wenigstens einem Härter, vorzugsweise mit wenigstens einem aminischen Härter umfasst.

Zu den erfindungsgemäß bevorzugten aminischen Härtern gehören aliphatische und cycloaliphatische Polyamine, aromatische Polyamine, Aminoplaste und Polyamidoamine, die gegebenenfalls in Kombination mit Uronen, Amiden, Guanidinen, Ketiminen, Isocyanaten, Imidazolen und Imidazolinen eingesetzt werden können.

Bevorzugt sind Aminhärter. Aminhärter vernetzen Epoxidharze durch Reaktion der primären oder sekundären Aminofunktionen der Polyamine mit terminalen Epoxidgruppen der Epoxidharze. Bevorzuge Polyaminhärter weisen im Mittel wenigstens zwei primäre oder sekundäre Aminogruppen pro Molekül, z. B. zwei, drei oder vier primäre oder sekundäre Aminogruppen pro Molekül auf. Geeignete Polyamine sind beispielsweise
- aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, Trimethylhexamethylendiamin, 1-(3-Aminopropyl)-3-aminopropan, 1,3-Bis-(3-aminopropyl)propan, 4-Ethyl-4-methylamino-1-octylamin und dergleichen;
- cycloaliphatische Diamine, wie 1,2-Diaminocyclohexan, 1,3-Bis(aminomethyl)-cyclohexan, 1-Methyl-2,4-diaminocyclohexan, 4-(2-Aminopropan-2-yl)-1-methylcyclohexan-1-amin, Isophorondiamin, 4,4'-Diaminodicyclohexylmethan, 3,3'-Dimethyl-4,4'-diaminodicyclohexylmethan, 4,8-Diamino-tricyclo[5.2.1.0]-decan, Norbornandiamin, Menthandiamin, Menthendiamin und dergleichen;
- aromatische Diamine, wie Toluylendiamin, Xylylendiamin, insbesondere meta-Xylylendiamin, Bis(4-aminophenyl)methan (MDA oder Methylendianilin), Bis(4-aminophenyl)sulfon (auch als DADS, DDS oder Dapson bekannt) und dergleichen;
- cyclische Polyamine, wie Piperazin, N-Aminoethylpiperazin und dergleichen;
- Polyetheramine, insbesondere difunktionelle und trifunktionelle primäre Polyetheramin auf der Basis von Polypropylenglykol, Polyethylenglykol, Polybutylenoxid, Poly-(1,4-butandiol), Poly-THF oder Polypentylenoxid, z. B. 4,7,10-Trioxatridecan-1,3-diamin, 4,7,10-Trioxatridecan-1,13-diamin, 1,8-Diamino-3,6-dioxaoctan (XTJ-504 von Huntsman), 1,10-Diamino-4,7-dioxadecan (XTJ-590 von Huntsman), 1,12-Diamino-4,9-dioxadodecan (BASF SE), 1,3-Diamino-4,7,10-trioxatridecan (BASF), primäre Polyetheramine auf der Basis von Polypropylenglykol mit einer mittleren Molmasse von 230 wie z. B. Polyetheramine D 230 (BASF SE) oder Jeffamine^{®} D 230 (Huntsman), difunktionelle, primäre Polyetheramine auf der Basis von Polypropylenglykol mit einer mittleren Molmasse von 400, z. B. Polyetheramine D 400 (BASF SE) oder Jeffamine^{®} XTJ 582 (Huntsman), difunktionelle, primäre Polyetheramine auf Basis von Polypropylenglykol mit einer mittleren Molmasse von 2000 wie z. B. Polyetheramine D 2000 (BASF SE), Jeffamine^{®} D2000 oder Jeffamine^{®} XTJ 578 (Huntsman), difunktionelle, primäre Polyetheramine auf der Basis von Propylenoxid mit einer mittleren Molmasse von 4000 wie z. B. Polyetheramin D 4000 (BASF SE), trifunktionelle, primäre Polyetheramine hergestellt durch Reaktion von Propylenoxid mit Trimethylolpropan gefolgt durch eine Aminierung der endständigen OH-Gruppen mit einer mittleren Molmasse von 403 wie z. B. Polyetheramine T 403 (BASF SE) oder Jeffamine^{®} T 403 (Huntsman), trifunktionelle, primären Polyetheramin hergestellt durch Reaktion von Propylenoxid mit Glycerin gefolgt durch eine Aminierung der endständigen OH-Gruppen mit einer mittleren Molmasse von 5000 wie z. B. Polyetheramine T 5000 (BASF SE) oder Jeffamine^{®} T 5000 (Huntsman), aliphatische Polyetheramine, die aus einem mit Propylenoxid gepfropftem Polyethylenglykol aufgebaut sind und eine mittlere Molmasse von 600 aufweisen, wie z. B. Jeffamine^{®} ED-600 bzw. Jeffamine^{®} XTJ 501 (jeweils Huntsman), aliphatische Polyetheramine, die aus einem mit Propylenoxid gepfropftem Polyethylenglykol aufgebaut sind und eine mittlere Molmasse von 900 aufweisen, wie z. B. Jeffamine^{®} ED-900 (Huntsman), aliphatische Polyetheramine, die aus einem mit Propylenoxid gepfropftem Polyethylenglykol aufgebaut sind und eine mittlere Molmasse von 2000 aufweisen, wie z. B. Jeffamine^{®} ED-2003 (Huntsman), difunktionelle, primäre Polyetheramin, hergestellt durch Aminierung eines mit Propylenoxid gepfropften Diethylenglykols mit einer mittleren Molmasse von 220, wie z. B. Jeffamine^{®} HK-511 (Huntsman), aliphatische Polyetheramine auf der Basis eines Copolymers aus Poly(tetramethylenetherglycol) und Polypropylenglycol mit einer mittleren Molmasse von 1000 wie z. B. Jeffamine^{®} XTJ-542 (Huntsman), aliphatische Polyetheramine auf der Basis eines Copolymers aus Poly(tetramethylenetherglycol) und Polypropylenglycol mit einer mittleren Molmasse von 1900 wie z. B. Jeffamine^{®} XTJ-548 (Huntsman), aliphatische Polyetheramine auf der Basis eines Copolymers aus Poly(tetramethylenetherglycol) und Polypropylenglycol mit einer mittleren Molmasse von 1400 wie z. B. Jeffamine^{®} XTJ-559 (Huntsman), Polyethertriamine auf der Basis eines mit Butylenoxid gepfropftem mindestens dreiwertigen Alkohols mit einer mittleren Molmasse von 400, wie z. B. Jeffamine^{®} XTJ-566 (Huntsman), aliphatische Polyetheramine hergestellt durch Aminierung von mit Butylenoxid aufgepfropften Alkoholen mit einer mittleren Molmasse von 219, wie z. B. Jeffamine^{®} XTJ-568 (Huntsman), Polyetheramine auf der Basis von Pentaerythrit und Propylenoxid mit einer mittleren Molmasse von 600 wie z. B. Jeffamine^{®} XTJ- 616 (Huntsman), Polyetheramine auf der Basis von Triethylenglykol mit einer mittleren Molmasse von 148, z. B. Jeffamine^{®} EDR-148 (Huntsman), difunktionelle, primäre Polyetheramine hergestellt durch Aminierung eines mit Propylenoxid gepfropften Ethylenglykols, mit einer mittleren Molmasse von176 wie z. B. Jeffamine^{®} EDR-176 (Huntsman), sowie Polyetheramine hergestellt durch Aminierung von PolyTHF mit einer mittleren Mollmasse von 250, z. B. PolyTHF-Amin 350 (BASF SE) und Mischungen dieser Amine.
- Polyamiddiamine (Amidopolyamine), die durch die Reaktion von dimeren Fettsäuren (z. B. dimere Linolsäure) mit niedermolekularen Polyaminen, wie Diethylentriamin, 1-(3-Aminopropyl)-3-aminopropan oder Triethylentetramin oder anderen Diaminen wie die zuvor genannten aliphatischen oder cycloaliphatischen Diamine, erhältlich sind;
sowie Mischungen der vorgenannten Aminhärter, insbesondere Mischungen von difunktionellen Aminen aus der Gruppe der aliphatischen, cycloaliphatischen und aromatischen Amine mit den vorgenannten Polyetheraminen.

Die Härter werden in solchen Mengen eingesetzt, dass das Verhältnis der Anzahl aller reaktiven Gruppen und der Anzahl aller Epoxidgruppen im Epoxidharz 2 : 1 bis 1 : 2, vorzugsweise 1,5 : 1 bis 1 : 1,5 und insbesondere etwa 1 : 1 beträgt. Bei einem stöchiometrischen Verhältnis von etwa 1 : 1 erhält man ein gehärtetes Harz mit optimalen duroplastischen Eigenschaften. Je nach gewünschten Eigenschaften des Harzes nach Vernetzung kann es aber auch sinnvoll sein, Härter und Epoxidharz in anderen Verhältnissen der reaktiven Gruppen einzusetzen.

In den erfindungsgemäßen Epoxidharzzusammensetzungen beträgt dementsprechend die Gesamtmenge an Härtern in der Regel 0,1 Gew.-% bis 50 Gew.-%, häufig 0,5 bis 40 Gew.-% und insbesondere 1 bis 30 Gew.-%, bezogen auf die Gesamtmenge an Verbindungen der Formeln I bzw. Ia oder Ib plus Epoxidharzkomponente A plus eingesetzten Härtern.

Zur Härtung können der Epoxidharzzusammensetzung auch Beschleuniger zugesetzt werden. Beispiele für Beschleuniger sind substituierte Imidazole wie 1-Methylimidazol, 2-Methylimidazol, 2,4-Ethyl-Methylimidazol, 2-Phenylimidazol, 1-Cyanoethylimidazol, Imidazoline wie 2-Phenylimidazolin, tertiäre Amine wie N,N-Dimethyl-benzylamin, 1,4-Diazabicyclo[2,2,2]octan (DABCO), 1,8-Diazabicyclo-[5.4.0]-undecen-7 (DBU), S-Triazin (Lupragen N 600), Bis-(2-dimethylaminoethyl)ether (Lupragen N 206), Pentamethyldiethylentriamin (Lupragen N 301), Trimethylaminoethylethanolamin (Lupragen N 400), Tetramethyl-1,6-hexandiamin (Lupragen N 500), Aminoethylmorpholin, 2,4,6-Tris-(dimethylaminomethyl)-phenol (DMP 30), Phenole und Phenolharze wie Bisphenol-A, Bisphenol-F, Nonylphenol, p-tert-Butylphenol, Phenolharze des Novolak-Typs, Salicylsäure, p-Toluolsulfonsäure, Aminopropylmorpholin, Aminoethylethylenharnstoff, Ketimine wie Epikure 3502 (ein Reaktionsprodukt aus Ethylenediamin mit Methylisobutylketon), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethylharnstoff (Chlorotoluron), Tolyl-2,4-bis-N,N-dimethylcarbamid (Amicure UR2T), Dicyandiamid (DICY), Mannich-Basen oder sekundären Aminen wie Dialkylamine wie beispielsweise Di-(2-ethylhexyl)amin, Dibutylamin, Dipropylamin, Ditridecylamin, N,N'-Diisopropylisophorondiamin (Jefflink^{®} XTJ-584), N,N'-Diisobutyl-4,4'-Diamino-dicyclohexylmethan (Clearlink 1000), N-(Hydroxyethyl)anilin, Di-(2-methoxyethyl)amin sowie Di- und Polyisocyanate wie Hexamethylendiisocyanat, Isophorondiisocyanat und dergleichen.

Die Härtung der erfindungsgemäßen Epoxidharzzusammensetzung kann thermisch durch Erwärmen des Gemischs aus Epoxidharz und Härter auf eine Temperatur oberhalb der Mischtemperatur erfolgen. Da jedoch die Anwesenheit der Verbindung der Formel I üblicherweise eine signifikante Erhöhung des Reaktivitätsniveaus der damit formulierten Epoxidharzzusammensetzungen bewirkt, kann die Härtung auch bei niedrigen Temperaturen erfolgen. Typischerweise erfolgt die Härtung der erfindungsgemäßen Epoxidharzzusammensetzungen bei Temperaturen im Bereich von 0 bis 200 °C, vorzugsweise im Bereich von 5 bis 180 °C und insbesondere im Bereich von 10 bis 150 °C. Welche Temperatur geeignet ist, hängt von den jeweiligen Härtern und Epoxidharzen und der gewünschten Härtungsgeschwindigkeit ab und kann im Einzelfall vom Fachmann beispielsweise anhand einfacher Vorversuche ermittelt werden. Im unteren Temperaturbereich (5 bis ca. 35 °C), der ja der meist vorherrschenden Umgebungstemperatur entspricht, reicht es selbstverständlich aus, Epoxidharz und Härter zu mischen.

Alternativ erfolgt die Härtung vorzugsweise mikrowelleninduziert.

Die erfindungsgemäßen Epoxidharzzusammensetzungen können in vielfältiger Weise eingesetzt werden. Sie eignen sich grundsätzlich für alle Anwendungen, in denen üblicherweise 1-K oder 2-K Epoxidharzformulierungen zum Einsatz kommen. Sie eignen sich beispielsweise als Bindemittelbestandteil in Beschichtungs- oder Imprägnierungsmittel, als Klebstoffe, zur Herstellung von Verbundwerkstoffen, insbesondere solchen auf Basis von Kohlefasermaterialien oder Glasfasermaterialien, zur Herstellung von Formkörpern oder als Gießmassen, insbesondere als Gießmassen zur Einbettung, Anbindung oder Verfestigung von Formkörpern. Dies und die nachstehenden Ausführungen dazu gelten sowohl für die 1 K- als auch für 2 K- Systeme, bevorzugte Systeme sind bei allen genannten Verwendungen die 2 K-Systeme.

Als Beschichtungsmittel seien z. B. Lacke genannt. Insbesondere können mit den erfindungsgemäßen Zusammensetzungen (1 K oder 2 K) kratzfeste Schutzlacke auf beliebigen Substraten, z. B. aus Metall, Kunststoff oder Holzwerkstoffen erhalten werden.

Da die Reaktivität der erfindungsgemäßen Epoxidharzzusammensetzungen vergleichsweise hoch ist, kann die Härtung bei niedrigen Temperaturen, z. B. im Bereich von 0 bis 50 °C und insbesondere im Bereich von 5 bis 35 °C erfolgen. Dies macht die erfindungsgemäßen Epoxidharzzusammensetzungen in besonderer Weise für die Beschichtung sehr großflächiger Substrate geeignet, die sich nicht oder nur schwierig auf Temperaturen oberhalb der Umgebungstemperatur erwärmen lassen. Hierzu zählt insbesondere die Beschichtung von Böden, insbesondere in stark beanspruchten Bereichen, z. B. zur Beschichtung von Laufbereichen öffentlicher Gebäude oder Plätze oder zur Beschichtung von Parkflächen und Zufahrten von Parkflächen. Hierzu zählt insbesondere auch die Beschichtung großflächiger Metallteile und Metallkonstruktionen, wie sie beispielsweise in oder an Gebäuden oder Schiffen (sog. Marine Coating).

Die Zusammensetzungen eignen sich auch als Isolierbeschichtungen in elektronischen Anwendungen, z. B. als Isolierbeschichtung für Drähte und Kabel. Genannt sei auch die Verwendung zur Herstellung von Photoresisten. Sie eignen sich insbesondere auch als Reparaturlack, z. B. auch bei der Ausbesserung von Rohren ohne Demontage der Rohre (cure in place pipe (CIPP) rehabilitation). Sie eignen sich auch zur Versiegelung bzw. Beschichtung von Fußböden.

Als Klebstoffe seien 1 K oder 2 K-Strukturklebstoffe erwähnt. Strukturklebstoffe dienen zur dauerhaften Verbindung von Formteilen miteinander. Die Formteile können aus beliebigem Material sein; in Betracht kommen Materialien aus Kunststoff, Metall, Holz, Leder, Keramik etc. Es kann sich dabei auch um Schmelzklebstoffe (hot melt adhesives) handeln, die erst bei höherer Temperatur fließfähig und verarbeitbar sind. Es kann sich auch um Fußbodenklebstoffe handeln. Die Zusammensetzungen eignen sich auch als Klebstoffe für die Herstellung von Leiterplatten (electronic curcuits), insbesondere auch nach der SMT Methode (surface mounted technology).

Die erfindungsgemäßen Epoxidharzzusammensetzungen eigen sich insbesondere auch zur Herstellung von Verbundwerkstoffen. In Verbundwerkstoffen (Composites) sind unterschiedliche Materialien, z. B. Kunststoffe und Verstärkungsmaterialien (Fasern, Carbonfasern) durch das ausgehärtete Epoxidharz miteinander verbunden.

Die erfindungsgemäßen Zusammensetzungen eignen sich z. B. zur Herstellung von mit Epoxidharzen imprägnierten Fasern oder zur Herstellung von aus Fasern hergestellten vorimprägnierter Garne und Gewebe, z. B. zur Herstellung von Prepregs die zu Verbundwerkstoffen weiterverarbeitet werden. Als Herstellverfahren für Verbundwerkstoffe seien die Härtung von vorimprägnierten Fasern oder Fasergeweben (z. B. Prepregs) nach Lagerung oder aber die Extrusion, Strangziehen (pultrusion), Wickeln (winding) und Resin Transfer Molding (RTM), Resin Infusion Technologies (RI) genannt. Insbesondere können die Fasern bzw. die daraus hergestellten Garne und Gewebe mit der erfindungsgemäßen Zusammensetzung getränkt werden und danach bei einer höheren Temperatur gehärtet werden.

Als Gießmassen zur Einbettung, Anbindung oder Verfestigung von Formkörpern werden die Zusammensetzungen z. B. in elektronischen Anwendungen eingesetzt. Sie eignen sich als Flip-chip underfill oder als Elektrogießharze für potting, casting und (glob-top-) encapsulation.

Die Erfindung betrifft insbesondere ein Verfahren zur Beschichtung von Oberflächen, bei dem man eine erfindungsgemäße Epoxidharzzusammensetzung, gegebenenfalls zusammen mit wenigstens einem Härter, auf die zu beschichtende Oberfläche aufbringt und aushärtet.

Das erfindungsgemäße Beschichtungsverfahren unterliegt im Hinblick auf die zu beschichtende Oberfläche keinen Beschränkungen. Beispiele für geeignete Oberflächen sind Metalloberflächen, Holzoberflächen, Glasöberflächen, Plastikoberflächen. Ein Fachmann kann durch einfache Vorversuche aber auch feststellen, ob andere Oberflächen für eine Beschichtung entsprechend dem erfindungsgemäßen Verfahren geeignet sind.

In einer bevorzugten Ausführungsform der Erfindung wird die Epoxidharzzusammensetzung für eine Beschichtung einer metallischen Oberfläche im Rahmen eines Coil-Coatings verwendet. Unter "Coil-Coating" versteht man das kontinuierliche Beschichten von Metallbändern mit flüssigen Beschichtungsstoffen. Dabei werden 0,2 bis 2 mm dicke und bis zu 2 m breite Metallbänder mit einer Geschwindigkeit von bis zu 200 m/min durch eine Coil-Coating-Anlage transportiert und dabei beschichtet. Hierzu können beispielsweise kaltgewalzte Bänder aus weichen Stählen oder Baustählen, elektrolytisch verzinktes Feinblech, feuerverzinktes Stahlband oder Bänder aus Aluminium bzw. Aluminiumlegierungen eingesetzt werden. Typische Anlagen umfassen eine Aufgabestation, einen Bandspeicher, eine Reinigungs- und Vorbehandlungszone, eine erste Lackierstation nebst Einbrennofen und folgender Kühlzone, eine zweite Lackierstation mit Ofen, Kaschierstation und Kühlung sowie einen Bandspeicher und Aufwickler.

Der Coil-Coating-Prozess umfasst üblicherweise die folgenden Verfahrensschritte:
1. Falls erforderlich: Reinigung des Metallbandes von Verschmutzungen, die sich während der Lagerung des Metallbandes angelagert haben sowie von temporären Korrosionsschutzölen mit Hilfe von Reinigungsbädern.
2. Auftragen einer dünnen Vorbehandlungsschicht (< 1 µm) im Tauch oder Spritzverfahren oder im Rollenauftrag. Diese Schicht soll die Korrosionsbeständigkeit steigern und dient der Verbesserung der Haftung nachfolgender Lackschichten an der Metalloberfläche. Hierzu sind Cr(VI )-haltige, Cr(III)-haltige sowie auch chromatfreie Vorbehandlungsbäder bekannt.
3. Aufbringen einer Grundierung ("Primer") z. B. im Rollenauftragsverfahren. Die Trockenschichtdicke liegt üblicherweise bei etwa 5 - 10 µm. Hier werden erfindungsgemäße, lösungsmittelbasierte Lacksysteme eingesetzt.
4. Aufbringen einer oder mehrerer Decklackschichten ("Topcoat") z. B. im Rollenauftragsverfahren. Die Trockenschichtdicke liegt hier bei etwa 10 - 50 µm. Hier werden ebenfalls in der Regel erfindungsgemäße, lösungsmittelbasierte Lacksysteme eingesetzt, wobei auch andere, konventionelle Lackformulierungen zur Anwendung kommen können.

### Beispiele:

### 1) Einsatzstoffe

### Herstellungsbeispiel 1:4-Ethyl-4-methyl-5-methylen-1,3-dioxolan-2-on (Verbindung 1)

Die Herstellung erfolgte in Analogie zu der aus DE 3233403 bekannten Vorschrift.

### Herstellungsbeispiel 2: 4,4-Dimethyl-5-methylen-1,3-dioxolan-2-on (Verbindung 2)

Die Herstellung erfolgte in Analogie zu der aus DE 3233403 bekannten Vorschrift.

### Herstellungsbeispiel 3: 4-Methylen-1,3-dioxa-spiro[4.5]decan-2-on

Die Herstellung erfolgte in Analogie zu der aus DE 3233403 bekannten Vorschrift.

### Herstellungsbeispiel 4: 4-Methylen-1,3-dioxolan-2-on

Die Herstellung erfolgte in Analogie zu der von F. Gagosz et al. Org. Lett. 2006, 8, 515-518 beschriebenen Methode durch sukzessive Umsetzung von Propargylalkohol mit Natriumhydrid und Boc₂O und anschließende Cyclisierung in Gegenwart von Triphenylphosphin-Gold(I)-Bis(trifluormethylsulfonyl)amid (PPh₃)AuNTf₂.

### Herstellungsbeispiel 5: 4-Methyl-5-methylen-1,3-dioxolan-2-on

Die Herstellung der Titelverbindung erfolgte durch Umsetzung von 1-Butin-3-ol mit CO₂ in Gegenwart von Cul auf Polystyrol-NMe₂ (8mol%, 140 bar, 40°C 24 h) in Analogie zu der in Eur. J. Org. Chem. 2008, 2309-2312.

### Herstellungsbeispiel 6: 4,4-Dimethyl-5-(3-methoxy-1-ethylen)-1,3-dioxolan-2-on

Die Herstellung erfolgte ausgehend von 1-Methoxy-4-methyl-2-butin-4-ol mit CO₂ in Gegenwart von Silber(I)acetat (10 mol-%) und DBU (1 mol) bei 10 bar, 25°C für 5 h in Analogie zu der in Eur. J. Org. Chem. 2007, 2604-2607 angegebenen Methode.

Als Epoxidharze der Komponente A wurden die folgenden Substanzen eingesetzt:
Epoxidharz 1: Aromatisches Epoxidharz auf Basis von Bisphenol A mit einem Epoxid-Äquivalent von 175 - 185 g/Äquiv. und einer Viskosität bei 25 °C von 8 - 10 PA s (Epilox A 18-00).
Epoxiharz 2: Cycloaliphatisches Epoxidharz in Form eines hydrierten Glycidylethers auf Basis von Bisphenol A mit einem Epoxid-Äquivalent von 205 - 235 g/Äquiv. und einer Viskosität bei 25 °C im Bereich von 1,5 - 3,0 Pa s (Epilox P 22-00).
Epoxiharz 3: Aromatisches Epoxidharz auf Basis von Bisphenol A mit einem EpoxidÄquivalent von 182 - 192 g/Äquiv. und einer Viskosität bei 25 °C im Bereich von 10 - 14 Pa s (Epilox A 19-03).
Epoxiharz 4: Aromatisches Epoxidharz auf Basis von Bisphenol F mit einem EpoxidÄquivalent von 165 - 173 g/Äquiv. und einer Viskosität bei 25 °C im Bereich von 2,5 - 4,5 Pa s (Epilox F 17-00).

Als konventionelle Verdünner wurden die folgenden Substanzen eingesetzt:
HDDGE: Hexandioldiglycidylether
BDGGE: Butandioldiglycidylether
Propylencarbonat

Als Härter wurden die folgenden Substanzen eingesetzt:
Härter H1: Isophorondiamin (IPDA)
Härter H2: Polyetheramin D230 (BASF SE)
Härter H3: Polyamidharz auf Basis einer Dimerfettsäure und Polyamin (Aminzahl 340 - 410 mg KOH/g: Versamid 140 der Fa. Cognis)
Härter H4: Diaminomethylcyclohexan
Härter H5: unmodifiziertes, flüssiges araliphatisches Polyamin (Epilox MXDA)
Härter H6: hydrophobes Polyamin auf Basis von Polytetrahydrofuran (polyTHF amine 350)
Härter H7: Polyaminoamid-Härter (Ancamide 2353)

### 2) Anwendungstechnische Prüfung

### 2.1) Bestimmung der Viskosität

Die Bestimmung der Viskositäten der erfindungsgemäßen Zusammensetzungen wurden bei 23 °C mittels eines Kegel-Platte-Viskosimeter der Fa. Epprecht Instruments (Basel, Schweiz) durchgeführt.

### 2.2) Bestimmung der Gelzeit

Zur Bestimmung der Gelzeit wurden 20 bis 30 mL der zu untersuchenden Epoxidharzzusammensetzung in einem 100 mL-Becherglas angemischt. Anschließend wurde ein Stahldraht mit einem Durchmesser von 1,5 mm in die Formulierung getaucht und mechanisch mit einer Frequenz von 40 min⁻¹ auf und ab bewegt. Zum Zeitpunkt der Aushärtung des Harzes wird das Becherglas durch diese Bewegung mit angehoben. Die Dauer vom Zeitpunkt des Zusammenmischens bis zu dem so bestimmten Zeitpunkt der Aushärtung gilt als Gelzeit.

### 2.3) Bestimmung der Klebfreizeit/Durchtrocknung

Die Bestimmung der Klebfreizeit erfolgte mittels eines Besandungsgerätes, das einen oder mehrere verschließbare Trichter zur Aufnahme von Feinsand (Komgröße bis 600 µm) und jeweils zwei am Auslauf des Trichters angebrachte, schmale Druckrollen aus Metall aufweist, wobei der Trichter horizontal in Laufrichtung der Druckrollen mit konstanter Geschwindigkeit bewegt werden kann.

Zur Bestimmung der Klebfreizeit/Durchtrocknung wird die jeweilige Epoxidharzzusammensetzung mittels eines Rakels auf eine Glasplatte (38*7 cm) appliziert. Unmittelbar im Anschluss daran werden der mit Sand befüllte Trichter und die Druckrollen auf die mit der Epoxidharzzusammensetzung beschichtete Oberfläche der Glasplatte so aufgesetzt, dass die Druckrollen in Längsrichtung der beschichteten Glasplatte zeigen. Der Verschluss am Auslauf des Trichters wird geöffnet und der Trichter horizontal mit konstanter Geschwindigkeit (1 cm/h oder 10 cm/h) in Richtung der Druckrollen bewegt. Dabei bilden sich eine Sandspur und zwei dazu parallele Druckspuren in der Lackoberfläche aus. Die Messtemperatur liegt bei etwa 23 +/- 2 °C und die Luftfeuchte etwa 50 %. Nach einem vollständigen Durchlauf wird der überschüssige Sand mit einem Pinsel entfernt und die Länge der Druckspuren sowie die Länge der Sandspur bestimmt. Die Klebfreizeit ergibt sich durch Multiplikation der Länge der Sandspur mit der Geschwindigkeit des Trichters und die Durchtrocknungszeit durch Multiplikation der Länge der Druckspur mit der Geschwindigkeit des Trichters.

Weiterhin wurden die folgenden Untersuchungen vorgenommen:
- Härte PH (Pendelhärte auf verzinktem Stahl in Anlehnung an DIN EN ISO 1522/Methode nach KÖNIG);
- Flexibilität ET (Tiefungsprüfung nach DIN EN ISO 1520);
- (Trocken-) Haftung (Gitterschnittprüfung mit Klebbandabriss nach DIN EN ISO 2409 GT-TR);
- Lösungsmittelbeständigkeit, angelehnt an DIN 68860/68861 und DIN EN 12720.

Untersuchung 1: Einfluss von Verdünnern auf die Gelzeit des aromatischen Epoxidharzes 1:

Das Epoxidharz 1 wurde mit den in Tabelle 1 angegebenen Mengen an Verdünner und Härter vermischt und anschließend wurde die Gelzeit, wie unter 2.2 beschrieben, bestimmt. Die in Tabelle 1 angegebenen Mengen der Komponenten sind in Gewichtsteilen angegeben. Die Gelzeiten sind in Tabelle 1 angegeben:

**Tabelle 1: Gelzeit des aromatischen Epoxidharz 1 in Abhängigkeit des zugesetzten Verdünners**

| # | Epoxidharz 1 | Verdünner | | Härter | | Gelzeit |
|---|---|---|---|---|---|---|
| | [GT] | Typ | [GT] | Typ | [GT] | [min] |
| 1 ²⁾ | 10 | -- | 0 | H1 | 2,33 | 263 |
| 2 ²⁾ | 9,9 | BDDGE | 0,1 | H1 | 2,34 | 273 |
| 3 ²⁾ | 9,9 | HDDGE | 0,1 | H1 | 2,34 | 273 |
| 4 ²⁾ | 9,9 | Propylencarbonat | 0,1 | H1 | 2,39 | 270 |
| 5 ¹⁾ | 9,9 | Verbindung 2 | 0,1 | H1 | 2,44 | 218 |
| 6 ²⁾ | 9,5 | BDDGE | 0,5 | H1 | 2,37 | 281 |
| 7 ²⁾ | 9,5 | HDDGE | 0,5 | H1 | 2,36 | 285 |
| 8 ²⁾ | 9,5 | Propylencarbonat | 0,5 | H1 | 2,63 | 255 |
| 9 ¹⁾ | 9,5 | Verbindung 2 | 0,5 | H1 | 2,86 | 131 |
| 10 ²⁾ | 9,0 | BDDGE | 1,0 | H1 | 2,41 | 297 |
| 11 ²⁾ | 9,0 | HDDGE | 1,0 | H1 | 2,38 | 270 |
| 12 ²⁾ | 9,0 | Propylencarbonat | 1,0 | H1 | 2,92 | 250 |
| 13 ¹⁾ | 9,0 | Verbindung 2 | 1,0 | H1 | 3,4 | 70 |
| 14 ²⁾ | 8,0 | BDDGE | 2,0 | H1 | 2,50 | 338 |
| 15 ²⁾ | 8,0 | HDDGE | 2,0 | H1 | 2,43 | 339 |
| 16 ²⁾ | 8,0 | Propylencarbonat | 2,0 | H1 | 3,52 | 265 |
| 17 ¹⁾ | 8,0 | Verbindung 2 | 2,0 | H1 | 4,50 | 10 |
| 18 ²⁾ | 7,0 | BDDGE | 3,0 | H1 | 2,58 | 426 |
| 19 ²⁾ | 7,0 | HDDGE | 3,0 | H1 | 2,48 | 442 |
| 20 ²⁾ | 7,0 | Propylencarbonat | 3,0 | H1 | 4,11 | 259 |
| 21 ¹⁾ | 7,0 | Verbindung 2 | 3,0 | H1 | 5,60 | 4 |
| 22 ²⁾ | 10 | -- | 0 | H4 | 1,80 | 392 |
| 23 ²⁾ | 9,9 | BDDGE | 0,1 | H4 | 1,81 | 433 |
| 24 ²⁾ | 9,9 | HDDGE | 0,1 | H4 | 1,81 | 391 |
| 25 ²⁾ | 9,9 | Propylencarbonat | 0,1 | H4 | 1,85 | 417 |
| 26 ¹⁾ | 9,9 | Verbindung 2 | 0,1 | H4 | 1,83 | 299 |
| 27 ²⁾ | 9,5 | BDDGE | 0,5 | H4 | 1,83 | 450 |
| 28 ²⁾ | 9,5 | HDDGE | 0,5 | H4 | 1,82 | 406 |
| 29 ²⁾ | 9,5 | Propylencarbonat | 0,5 | H4 | 2,03 | 429 |
| 30 ¹⁾ | 9,5 | Verbindung 2 | 0,5 | H4 | 1,96 | 121 |
| 31 ²⁾ | 9,0 | BDDGE | 1,0 | H4 | 1,86 | 461 |
| 32 ²⁾ | 9,0 | HDDGE | 1,0 | H4 | 1,84 | 430 |
| 33 ²⁾ | 9,0 | Propylencarbonat | 1,0 | H4 | 2,25 | 435 |
| 34 ¹⁾ | 9,0 | Verbindung 2 | 1,0 | H4 | 2,12 | 24 |
| 35 ²⁾ | 8,0 | BDDGE | 2,0 | H4 | 1,92 | 506 |
| 36 ²⁾ | 8,0 | HDDGE | 2,0 | H4 | 1,87 | 540 |
| 37 ²⁾ | 8,0 | Propylencarbonat | 2,0 | H4 | 2,70 | 516 |
| 38 ¹⁾ | 8,0 | Verbindung 2 | 2,0 | H4 | 2,44 | 7 |
| 39 ²⁾ | 7,0 | BDDGE | 3,0 | H4 | 1,97 | 574 |
| 40 ²⁾ | 7,0 | HDDGE | 3,0 | H4 | 1,90 | 639 |
| 41 ²⁾ | 7,0 | Propylencarbonat | 3,0 | H4 | 3,15 | 616 |
| 42 ¹⁾ | 7,0 | Verbindung 2 | 3,0 | H4 | 2,76 | 5 |
| 43 ²⁾ | 10 | -- | 0 | H2 | 3,23 | 1036 |
| 44 ²⁾ | 9,9 | BDDGE | 0,1 | H2 | 3,24 | 979 |
| 45 ¹⁾ | 9,9 | Verbindung 2 | 0,1 | H2 | 3,28 | 908 |
| 46 ²⁾ | 9,5 | BDDGE | 0,5 | H2 | 3,28 | 1021 |
| 47 ¹⁾ | 9,5 | Verbindung 2 | 0,5 | H2 | 3,51 | 669 |
| 48 ²⁾ | 9,0 | BDDGE | 1,0 | H2 | 3,33 | 1146 |
| 49 ¹⁾ | 9,0 | Verbindung 2 | 1,0 | H2 | 3,80 | 509 |
| 50 ²⁾ | 8,0 | BDDGE | 2,0 | H2 | 3,44 | 1205 |
| 51 ¹⁾ | 8,0 | Verbindung 2 | 2,0 | H2 | 4,38 | 365 |
| 52 ²⁾ | 10 | -- | 0 | H3 | 6,67 | 318 |
| 53 ²⁾ | 9,9 | BDDGE | 0,1 | H3 | 6,69 | 303 |
| 54 ¹⁾ | 9,9 | Verbindung 2 | 0,1 | H3 | 6,71 | 310 |
| 55 ²⁾ | 9,5 | BDDGE | 0,5 | H3 | 6,78 | 321 |
| 56 ¹⁾ | 9,5 | Verbindung 2 | 0,5 | H3 | 6,90 | 271 |
| 57 ²⁾ | 9,0 | BDDGE | 1,0 | H3 | 6,88, | 339 |
| 58 ¹⁾ | 9,0 | Verbindung 2 | 1,0 | H3 | 7,12 | 255 |
| 59 ²⁾ | 8,0 | BDDGE | 2,0 | H3 | 7,10 | 383 |
| 60 ¹⁾ | 8,0 | Verbindung 2 | 2,0 | H3 | 7,58 | 185 |

| | | | | | | |
|---|---|---|---|---|---|---|
| ¹⁾: erfindungsgemäß ²⁾: Vergleichsversuch | | | | | | |

Untersuchung 2: Einfluss von Verdünnern auf die Gelzeit des cycloaliphatischen Epoxidharzes 2

Das Epoxidharz 2 wurde mit den in Tabelle 2 angegebenen Mengen an Verdünner und Härter vermischt und anschließend wurde die Gelzeit, wie unter 2.2 beschrieben, bestimmt. Die in Tabelle 2 angegebenen Mengen der Komponenten sind in Gewichtsteilen angegeben. Die Gelzeiten sind in Tabelle 2 angegeben.

**Tabelle 2: Gelzeit des cycloaliphatischen Epoxidharzes 2 in Abhängigkeit des zugesetzten Verdünners**

| # | Epoxidharz 2 | Verdünner | | Härter | | Gelzeit |
|---|---|---|---|---|---|---|
| | [GT] | Typ | [GT] | Typ | [GT] | [min] |
| 61 ²⁾ | 10 | -- | 0 | H1 | 1,91 | 624 |
| 62 ²⁾ | 9,9 | BDDGE | 0,1 | H1 | 1,92 | 578 |
| 63 ²⁾ | 9,9 | HDDGE | 0,1 | H1 | 1,92 | 562 |
| 64 ²⁾ | 9,9 | Propylencarbonat | 0,1 | H1 | 1,98 | 589 |
| 65 ¹⁾ | 9,9 | Verbindung 2 | 0,1 | H1 | 1,96 | 560 |
| 66 ²⁾ | 9,5 | BDDGE | 0,5 | H1 | 1,97 | 665 |
| 67 ²⁾ | 9,5 | HDDGE | 0,5 | H1 | 1,96 | 609 |
| 68 ²⁾ | 9,5 | Propylencarbonat | 0,5 | H1 | 2,23 | 565 |
| 69 ¹⁾ | 9,5 | Verbindung 2 | 0,5 | H1 | 2,15 | 344 |
| 70 ²⁾ | 9,0 | BDDGE | 1,0 | H1 | 2,04 | 800 |
| 71 ²⁾ | 9,0 | HDDGE | 1,0 | H1 | 2,00 | 659 |
| 72 ²⁾ | 9,0 | Propylencarbonat | 1,0 | H1 | 2,55 | 520 |
| 73 ¹⁾ | 9,0 | Verbindung 2 | 1,0 | H1 | 2,38 | 175 |
| 74 ²⁾ | 8,0 | BDDGE | 2,0 | H1 | 2,16 | 803 |
| 75 ²⁾ | 8,0 | HDDGE | 2,0 | H1 | 2,10 | 710 |
| 76 ²⁾ | 8,0 | Propylencarbonat | 2,0 | H1 | 3,18 | 503 |
| 77 ¹⁾ | 8,0 | Verbindung 2 | 2,0 | H1 | 2,85 | 23 |
| 78 ²⁾ | 7,0 | BDDGE | 3,0 | H1 | 2,28 | 878 |
| 79 ²⁾ | 7,0 | HDDGE | 3,0 | H1 | 2,19 | 845 |
| 80 ²⁾ | 7,0 | Propylencarbonat | 3,0 | H1 | 3,82 | 519 |
| 81 ¹⁾ | 7,0 | Verbindung 2 | 3,0 | H1 | 3,31 | 8 |
| 82 ²⁾ | 10 | -- | 0 | H4 | 1,46 | 759 |
| 83 ²⁾ | 9,9 | BDDGE | 0,1 | H4 | 1,47 | 870 |
| 84 ²⁾ | 9,9 | HDDGE | 0,1 | H4 | 1,46 | 883 |
| 85 ²⁾ | 9,9 | Propylencarbonat | 0,1 | H4 | 1,51 | 842 |
| 86 ¹⁾ | 9,9 | Verbindung 2 | 0,1 | H4 | 1,49 | 649 |
| 87 ²⁾ | 9,5 | BDDGE | 0,5 | H4 | 1,50 | 911 |
| 88 ²⁾ | 9,5 | HDDGE | 0,5 | H4 | 1,49 | 897 |
| 89 ²⁾ | 9,5 | Propylencarbonat | 0,5 | H4 | 1,70 | 863 |
| 90 ¹⁾ | 9,5 | Verbindung 2 | 0,5 | H4 | 1,63 | 330 |
| 91 ²⁾ | 9,0 | BDDGE | 1,0 | H4 | 1,55 | 940 |
| 92 ²⁾ | 9,0 | HDDGE | 1,0 | H4 | 1,53 | 972 |
| 93 ²⁾ | 9,0 | Propylencarbonat | 1,0 | H4 | 1,94 | 907 |
| 94 ¹⁾ | 9,0 | Verbindung 2 | 1,0 | H4 | 1,81 | 110 |
| 95 ²⁾ | 8,0 | BDDGE | 2,0 | H4 | 1,64 | 1183 |
| 96 ²⁾ | 8,0 | HDDGE | 2,0 | H4 | 1,59 | 1142 |
| 97 ²⁾ | 8,0 | Propylencarbonat | 2,0 | H4 | 2,42 | 1004 |
| 98 ¹⁾ | 8,0 | Verbindung 2 | 2,0 | H4 | 2,17 | 17 |
| 99 ²⁾ | 7,0 | BDDGE | 3,0 | H4 | 1,73 | 1206 |
| 100 ²⁾ | 7,0 | HDDGE | 3,0 | H4 | 1,66 | 1269 |
| 101 ²⁾ | 7,0 | Propylencarbonat | 3,0 | H4 | 2,91 | 1142 |
| 102 ¹⁾ | 7,0 | Verbindung 2 | 3,0 | H4 | 2,52 | 5 |

| | | | | | | |
|---|---|---|---|---|---|---|
| ¹⁾: erfindungsgemäß ²⁾: Vergleichsversuch | | | | | | |

### Untersuchung 3: Einfluss von Verdünnern auf die Viskosität von Epoxidharz 2

Das Epoxidharz 2 wurde in den in Tabelle 3 angegebenen Mengenverhältnissen mit Butandioldiglycidylether bzw. der Verbindung 2 vermischt. Anschließend wurde die Viskosität wie unter 2.1 beschrieben bestimmt. Die Ergebnisse sind in Tabelle 3 zusammengestellt.

**Tabelle 3: Viskosität von Epoxidharzzusammensetzungen des Epoxidharzes 2 ohne Härter**

| Bestandteil | Epoxidharzzusammensetzung | | | | | |
|---|---|---|---|---|---|---|
| | V1²⁾ | V2²⁾ | V3²⁾ | 1¹⁾ | 2¹⁾ | 3¹⁾ |
| Epoxidharz 2 [GT] | 10 | 9 | 8 | 9,9 | 9,5 | 9 |
| BDDGE [GT] | 0 | 1 | 2 | 0 | 0 | 0 |
| Verbindung 2 [GT] | 0 | 0 | 0 | 0,1 | 0,5 | 1 |
| Viskosität bei 23 °C [mPa.s] | 2950 | 950 | 420 | 2440 | 1360 | 710 |

| | | | | | | |
|---|---|---|---|---|---|---|
| ¹⁾: erfindungsgemäß ²⁾: Vergleichsversuch | | | | | | |

Untersuchung 4: Einfluss von Reaktivverdünnern auf die Klebfreizeit und Pendeldämpfung

Die Epoxidharze 2 und 3 wurden in den in den Tabelle 4 und 5 angegebenen Mengenverhältnissen mit Härtern, Verdünnern und den Verbindungen 1 bzw. 2 vermischt. Anschließend erfolgte eine Bestimmung der Klebfreizeit und Untersuchungen zur Pendelhärte. Die Ergebnisse sind in Tabelle 4 für das Epoxidharz 2 und in Tabelle 5 für die Epoxidharze 3 und 4 zusammengestellt.

**Tabelle 4: Klebfreizeiten und Pendeldämpfung einer ausgehärteten Epoxidharzzusammensetzung auf Basis von Epoxidharz 2:**

| Bestandteil | Epoxidharzzusammensetzung | | | | | |
|---|---|---|---|---|---|---|
| | V1²⁾ | V2²⁾ | V3²⁾ | 1¹⁾ | 2¹⁾ | 3¹⁾ |
| Epoxidharz 2 [GT] | 10 | 9 | 8 | 9,9 | 9,5 | 9 |
| BDDGE [GT] | 0 | 1 | 2 | 0 | 0 | 0 |
| Verbindung 2 [GT] | 0 | 0 | 0 | 0,1 | 0,5 | 1 |
| Härter H1 [GT] | 1,91 | 2,04 | 2,16 | 1,96 | 2,15 | 2,38 |
| Klebfreizeit [min] | 450 | 870 | >1410³⁾ | 450 | 150 | 120 |
| Durchhärtung [min] | 1110 | 1380 | >1410³⁾ | 990 | 900 | 630 |
| Pendeldämpfung | | | | | | |

| Bestandteil | Epoxidharzzusammensetzung | | | | | |
|---|---|---|---|---|---|---|
| | V1²⁾ | V2²⁾ | V3²⁾ | 1¹⁾ | 2¹⁾ | 3¹⁾ |
| [s] | 233,8 | 246,4 | 191,8 | 245 | 236,6 | 204,4 |
| [Ausschläge] | 167 | 176 | 137 | 175 | 169 | 146 |

| | | | | | | |
|---|---|---|---|---|---|---|
| ¹⁾: erfindungsgemäß ²⁾: Vergleichsversuch ³⁾: Oberhalb der Messgrenze von 1410 min | | | | | | |

**Tabelle 5: Klebfreizeiten und Pendeldämpfung einer ausgehärteten Epoxidharzzusammensetzung auf Basis von den Epoxidharzen 3 und 4:**

| Bestandteil | Epoxidharzzusammensetzung | | | | | |
|---|---|---|---|---|---|---|
| | V4²⁾ | 4¹⁾ | 5¹⁾ | 6¹⁾ | V5²⁾ | 7¹⁾ |
| Epoxidharz 3 [GT] | 10 | 9 | 8 | 8 | 0 | 0 |
| Epoxidharz 4 [GT] | 0 | 0 | 0 | 0 | 10 | 9 |
| BDDGE [GT] | 0 | 0 | 1 | 0 | 0 | 0 |
| HDDGE | 0 | 0 | 0 | 1 | 0 | 0 |
| Verbindung 1 [GT] | 0 | 1 | 1 | 1 | 0 | 1 |
| Härter H5 [GT] | 1,87 | 2,2 | 2,2 | 2,2 | 2 | 2,3 |
| Klebfreizeit [min] | 300 | 120 | 150 | 150 | n.b. | n.b. |
| Durchhärtung [min] | 420 | 210 | 270 | 270 | n.b. | n.b. |
| Pendeldämpfung | | | | | | |
| [s] | 242,2 | 229,6 | 225,4 | 229,6 | n.b. | n.b. |
| [Ausschläge] | 173 | 164 | 161 | 164 | n.b. | n.b. |

| | | | | | | |
|---|---|---|---|---|---|---|
| ¹⁾: erfindungsgemäß ²⁾: Vergleichsversuch ³⁾: Oberhalb der Messgrenze von 1410 min n.b.: nicht bestimmt | | | | | | |

### Untersuchung 5: Einfluss von Härtern auf die Klebfreizeit und Pendeldämpfung

Die Epoxidharze 1 bzw. 2 wurden in den in den Tabellen 6 und 7 angegebenen Mengenverhältnissen mit den Härter H5 bzw. Härter H6 und der Verbindung 1 vermischt. Die Epoxidharze 3 und wurden in den in den Tabellen 8 angegebenen Mengenverhältnissen mit den Härtern H5 und H7 sowie mit Mischungen von den Härtern H5 und H7 vermischt. Anschließend erfolgte eine Bestimmung der Klebfreizeit und Untersuchungen zur Pendelhärte. Die Ergebnisse sind in den Tabelle 6 bis 8 zusammengestellt.

**Tabelle 6: Klebfreizeiten und Pendeldämpfung einer ausgehärteten Epoxidharzzusammensetzung auf Basis von Epoxidharz 1:**

| Bestandteil | Epoxidharzzusammensetzung | | | | | | | |
|---|---|---|---|---|---|---|---|---|
| | V1²⁾ | 1¹⁾ | 2¹⁾ | 3¹⁾ | V2²⁾ | 4¹⁾ | 5¹⁾ | 6¹⁾ |
| Epoxidharz 1 [GT] | 10 | 9,5 | 9 | 8,5 | 10 | 9,5 | 9 | 8,5 |
| Härter H5 [GT] | 1,91 | 2,05 | 2,2 | 2,34 | 0 | 0 | 0 | 0 |
| Härter H6 [GT] | 0 | 0 | 0 | 0 | 5 | 4,41 | 4,78 | 5,15 |
| Verbindung 1 [GT] | 0 | 0,5 | 1 | 1,5 | 0 | 0,5 | 1 | 1,5 |
| Klebfreizeit [min] | 255 | 180 | 135 | 90 | 960 | 675 | 600 | 570 |
| Durchhärtung [min] | 375 | 270 | 195 | 165 | 1620 | 900 | 690 | 600 |
| Pendeldämpfung | | | | | | | | |
| [s] | 238 | 231 | 235,2 | 239,4 | 11,2 | 21 | 105 | 137,2 |
| [Ausschläge] | 170 | 165 | 167 | 171 | 8 | 15 | 75 | 98 |

| | | | | | | | | |
|---|---|---|---|---|---|---|---|---|
| ¹⁾: erfindungsgemäß ²⁾: Vergleichsversuch | | | | | | | | |

**Tabelle 7: Klebfreizeiten und Pendeldämpfung einer ausgehärteten Epoxidharzzusammensetzung auf Basis von Epoxidharz 2:**

| Bestandteil | Epoxidharzzusammensetzung | | | | | | | |
|---|---|---|---|---|---|---|---|---|
| | V3²⁾ | 7¹⁾ | 8¹⁾ | 9¹⁾ | V4²⁾ | 10¹⁾ | 11¹⁾ | 12¹⁾ |
| Epoxidharz 2 [GT] | 10 | 9,5 | 9 | 8,5 | 10 | 9,5 | 9 | 8,5 |
| Härter H5 [GT] | 1,55 | 1,71 | 1,87 | 2,03 | 0 | 0 | 0 | 0 |
| Härter H6 [GT] | 0 | 0 | 0 | 0 | 4,05 | 4,41 | 4,78 | 5,15 |
| Verbindung 1 [GT] | 0 | 0,5 | 1 | 1,5 | 0 | 0,5 | 1 | 1,5 |
| Klebfreizeit [min] | 285 | 240 | 210 | 90 | 2220 | 1800 | 1605 | 1545 |
| Durchhärtung [min] | 660 | 540 | 450 | 360 | 2475 | 2370 | 1860 | 1650 |
| Pendeldämpfung | | | | | | | | |
| [s] | 203 | 217 | 222,6 | 232,4 | 9,8 | 12,6 | 11,2 | 7 |
| [Ausschläge] | 145 | 155 | 159 | 166 | 7 | 9 | 8 | 5 |

| | | | | | | | | |
|---|---|---|---|---|---|---|---|---|
| ¹⁾: erfindungsgemäß ²⁾: Vergleichsversuch | | | | | | | | |

**Tabelle 8: Klebfreizeiten und Pendeldämpfung einer ausgehärteten Epoxidharzzusammensetzung auf Basis von Epoxidharz 3 oder 4:**

| Bestandteil | Epoxidharzzusammensetzung | | | | | | | |
|---|---|---|---|---|---|---|---|---|
| | V5²⁾ | 13¹⁾ | V6²⁾ | 14¹⁾ | V7²⁾ | 15¹⁾ | V8²⁾ | 18¹⁾ |
| Epoxidharz 3 [GT] | 10 | 9 | 10 | 9 | 0 | 0 | 0 | 0 |
| Epoxidharz 4 [GT] | 0 | 0 | 0 | 0 | 10 | 9 | 10 | 9 |
| Härter H5 [GT] | 1,87 | 2,2 | 1,37 | 1,8 | 2 | 2,3 | 1,4 | 1,9 |
| Härter H7 [GT] | 0 | 0 | 1,88 | 1,88 | 0 | 0 | 2,02 | 2,02 |
| Verbindung 1 [GT] | 0 | 1 | 0 | 1 | 0 | 1 | 0 | 1 |
| Klebfreizeit [min] | 300 | 120 | 300 | 135 | 270 | 110 | 265 | 135 |
| Durchhärtung [min] | 420 | 210 | 360 | 270 | 390 | 240 | 405 | 285 |
| Pendeldämpfung | | | | | | | | |
| [s] | 242,2 | 229,6 | 201,6 | 212,8 | 218,4 | 226,8 | 184,8 | 207,2 |
| [Ausschläge] | 173 | 164 | n.b. | n.b. | 156 | 162 | n.b. | n.b. |

| | | | | | | | | |
|---|---|---|---|---|---|---|---|---|
| ¹⁾: erfindungsgemäß ²⁾: Vergleichsversuch n.b.: nicht bestimmt | | | | | | | | |

Untersuchung 6: Einfluss des Zugabezeitpunktes von Härtern auf die Klebfreizeit und Pendeldämpfung

Die Epoxidharze 3 und 4 wurden in den in der Tabelle 9 angegebenen Mengenverhältnissen mit Verbindung 1 vermischt. Erst nach 24 h bei Raumtemperatur wurden den Harzen ein Gemisch wie in Tabelle 9 beschrieben zugegeben. Nach 1 Woche Aushärtung bei Raumtemperatur erfolgte eine Bestimmung der Klebfreizeit und Untersuchungen zur Pendelhärte. Die Ergebnisse sind in den Tabelle 9 zusammengestellt.

**Tabelle 9: Klebfreizeiten und Pendeldämpfung einer ausgehärteten Epoxidharzzusammensetzung auf Basis von Epoxidharz 3 und 4:**

| Bestandteil | Epoxidharzzusammensetzung | | | | | |
|---|---|---|---|---|---|---|
| | V1²⁾ | 1¹⁾ | V2²⁾ | 2¹⁾ | V3²⁾ | 3¹⁾ |
| Epoxidharz 3 [GT] | 9 | 8 | 0 | 0 | 9 | 0 |
| Epoxidharz 4 [GT] | 0 | 0 | 9 | 8 | 0 | 9 |
| Verbindung 1 [GT] | 0 | 1 | 0 | 1 | 0 | 0 |
| Zugabe der folgenden Verbindungen nach 24h bei RT | | | | | | |
| Härter H5 [GT] | 1,87 | 2,2 | 2 | 2,3 | 2,2 | 2 |
| Epoxidharz 3 [GT] | 1 | 1 | 0 | 0 | 0 | 0 |
| Epoxidharz 4 [GT] | 0 | 0 | 1 | 1 | 0 | 0 |
| Verbindung 1 [GT] | 0 | 0 | 0 | 0 | 1 | 1 |
| Klebfreizeit [min] | 120 | 90 | 90 | 90 | 90 | 90 |
| Durchhärtung [min] | 240 | 180 | 240 | 150 | 180 | 210 |
| Pendeldämpfung | | | | | | |
| [s] | 233,8 | 238 | 231 | 233,8 | 238 | 231 |
| [Ausschläge] | 167 | 170 | 165 | 167 | 170 | 165 |

| | | | | | | |
|---|---|---|---|---|---|---|
| ¹⁾: erfindungsgemäß ²⁾: Vergleichsversuch | | | | | | |

### Untersuchung 7: Härtung bei niedrigen Temperaturen (10 °C)

Das Epoxidharz 3 wurde in den in der Tabelle 10 angegebenen Mengenverhältnissen mit den Härtern H1 bzw. H2 sowie der Verbindung 1 bei 10 °C vermischt und 1 min bei 2000 s⁻¹ mit einem Hochgeschwindigkeitsmischer homogenisiert. Die Viskosität der Mischung wurde bei 10 °C alle 30 sec über einen Zeitraum von bis zu,6 h bestimmt. Die Bestimmung der Viskosität erfolgte mit einem Spannungskontrollierten Rheometer (MCR 301, Anton Paar) mit Platte-Platte Geometrie (Durchmesser 25 mm, Spalt 1 mm) bei einer Scherrate von 100 sec⁻¹. Die Ergebnisse sind in der Tabelle 10 zusammengestellt.

**Tabelle 10: Härtung bei einer Temperatur von 10 °C:**

| Bestandteil | Epoxidharzzusammensetzung | | | | | | | |
|---|---|---|---|---|---|---|---|---|
| | V1²⁾ | 1¹⁾ | 2¹⁾ | V2²⁾ | 3¹⁾ | 4¹⁾ | 5¹⁾ | 6¹⁾ |
| Epoxidharz 3 [GT] | 100 | 100 | 100 | 100 | 100 | 100 | 100 | 100 |
| Härter H1[GT] | 23,6 | 30,2 | 36,7 | 0 | 0 | 0 | 0 | 0 |
| Härter H5[GT] | 0 | 0 | 0 | 18,7 | 20 | 18,7 | 21,3 | 18,7 |
| Beschleuniger DMP 30³⁾ [GT] | 0 | 0 | 0 | 5 | 0 | 0 | 0 | 0 |
| Verbindung 1 [GT] | 0 | 10 | 20 | 0 | 2,48 | 2,48 | 5 | 5 |
| Viskosität: | | | | | | | | |
| > 100 Pas [min] | 267 | 83 | 52 | n.b. | n.b. | n.b. | n.b. | n.b. |
| > 300 Pas [min] | n.b. | n.b. | n.b. | 401 | 321 | 295 | 213 | 185 |

| | | | | | | | | |
|---|---|---|---|---|---|---|---|---|
| ¹⁾: erfindungsgemäß ²⁾: Vergleichsversuch ³⁾: 2,4,6 Trisdimethylaminomethylphenol n.b.: nicht bestimmt | | | | | | | | |

## Patentansprüche

1. Verwendung einer Verbindung der allgemeinen Formel I 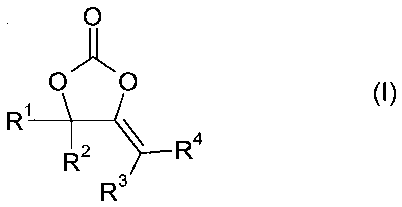 worin
R¹ und R² unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R¹ und R² gemeinsam für eine C₃-C₁₁-Alkylengruppe stehen;
R³ und R⁴ unabhängig voneinander für Wasserstoff, C₁-C₆-Alkyl, C₁-C₄-Alkoxy-C₁-C₄-alkyl, C₅-C₆-Cycloalkyl, Phenyl, Phenyl-C₁-C₄-alkyl, C₂-C₆-Alkenyl oder C₂-C₆-Alkinyl stehen, oder R³ und R⁴ gemeinsam für eine C₄-C₆-Alkylengruppe stehen;
oder Gemischen davon, in Epoxidharzformulierungen.

2. Verwendung nach Anspruch 1, worin R¹ ausgewählt ist unter Wasserstoff und C₁-C₄-Alkyl, und R² ausgewählt ist unter C₁-C₄-Alkyl, C₁-C₄-Alkoxy-C₁-C₄-alkyl oder R¹ und R² gemeinsam für eine C₄-C₆-Alkylengruppe stehen.

3. Verwendung nach einem der vorhergehenden Ansprüche, worin R¹ und R² jeweils für C₁-C₄-Alkyl, insbesondere für Methyl oder Ethyl stehen.

4. Verwendung nach einem der vorhergehenden Ansprüche, worin R³ und R⁴ für Wasserstoff stehen.

5. Verwendung nach einem der vorhergehenden Ansprüche, worin die Verbindungen der Formel I ausgewählt sind unter:
4,4-Diethyl-5-methylen-1,3-dioxolan-2-on,
4,4-Dimethyl-5-methylen-1,3-dioxolan-2-on,
4-Ethyl-5-methylen-1,3-dioxolan-2-on,
4-Ethyl-4-methyl-5-methylen-1,3-dioxolan-2-on,
4-Isopropyl-5-methylen-1,3-dioxolan-2-on,
4-Isopropyl-4-methyl-5-methylen-1,3-dioxolan-2-on,
4-Methylen-1,3-dioxa-spiro[4.5]decan-2-on,
4-Phenyl-4methyl-5-methylen-1,3-dioxolan-2-on,
4-n-Propyl-5-methylen-1,3-dioxolan-2-on,
4-n-Propyl-4-methyl-5-methylen-1,3-dioxolan-2-on,
und deren Gemischen

6. Epoxidharzzusammensetzung, enthaltend
a) wenigstens ein Epoxidharz als Komponente A und
b) wenigstens eine Verbindung der Formel I gemäß einem der vorhergehenden Ansprüche als Komponente B.

7. Epoxidharzzusammensetzung nach Anspruch 6, zusätzlich enthaltend wenigstens einen konventionellen Reaktivverdünner, der ausgewählt ist unter Glycidylethern aliphatischer Polyole mit 2 bis 8 C-Atomen, Glycidylethern ungesättigter Polyole mit 2 bis 8 C-Atomen, Glycidylethern cyclaliphatischer Polyole mit 3 bis 8 C-Atomen und Glycidylethern aromatischer Polyole mit 6 bis 8 C-Atomen.

8. Epoxidharzzusammensetzung nach Anspruch 6 oder 7, enthaltend wenigstens eine Verbindung der Formel I in einer Menge von 0,1 bis 50 Gew.-%, bezogen auf das Gesamtgewicht der Zusammensetzung.

9. Epoxidharzzusammensetzung nach einem der Ansprüche 6 bis 8, worin die Komponente A ausgewählt ist unter Polyglycidylethern von aromatischen, aliphatischen oder cycloaliphatischen Polyolen.

10. Epoxidharzzusammensetzung nach einem der Ansprüche 6 bis 9, worin die Komponente A wenigstens einen Polyglycidylether eines aromatischen Polyols umfasst, die ausgewählt ist unter den Polyglycidylethern von Bisphenol-A, von Bisphenol-F, von Novolaken und deren Gemischen.

11. Epoxidharzzusammensetzung nach einem der Ansprüche 6 bis 8, worin die Komponente A wenigstens einen Polyglycidylether eines cycloaliphatischen Polyols umfasst, die ausgewählt ist unter den Kernhydrierungsprodukten von Polyglycidylethern des Bisphenol-A, den Kernhydrierungsprodukten von Polyglycidylethern des Bisphenol-F, den Kernhydrierungsprodukten von Polyglycidylethern von Novolaken und deren Gemischen.

12. Verwendung von Epoxidharzzusammensetzungen nach einem der Ansprüche 6 bis 11 als Bindemittelbestandteil in Beschichtungsmitteln, in Gießmassen, zur Herstellung von Verbundwerkstoffen oder in Strukturklebstoffen.

13. Verwendung einer Epoxidharzzusammensetzung nach einem der Ansprüche 6 bis 11 zur Imprägnierung von Fasern oder aus Fasern hergestellten Garnen oder Geweben.

14. Verfahren zum Aushärten einer Epoxidharzzusammensetzung, umfassend die Umsetzung einer Epoxidharzzusammensetzung nach einem der Ansprüche 6 bis 11 unter Zugabe wenigstens eines Härters.

15. Verfahren zum Beschichtung von Oberflächen, umfassend das Aufbringen einer Epoxidharzzusammensetzung nach einem der Ansprüche 6 bis 11, gegebenenfalls zusammen mit wenigstens einem Härter, auf die zu beschichtende Oberfläche.

## Claims

1. The use of a compound of the general formula I 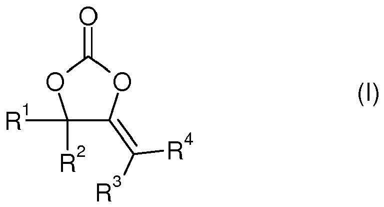 in which
R¹ and R² independently of each other are hydrogen, C₁-C₆-alkyl, C₁-C₄-alkoxy-C₁-C₄-alkyl, C₅-C₆-cycloalkyl, phenyl, phenyl-C₁-C₄-alkyl, C₂-C₆-alkenyl or C₂-C₆-alkynyl, or R¹ and R² together are a C₃-C₁₁-alkylene group;
R³ and R⁴ independently of each other are hydrogen, C₁-C₆-alkyl, C₁-C₄-alkoxy-C₁-C₄-alkyl, C₅-C₆-cycloalkyl, phenyl, phenyl-C₁-C₄-alkyl, C₂-C₆-alkenyl or C₂-C₆-alkynyl, or R³ and R⁴ together are a C₄-C₆-alkylene group;
or mixtures thereof, in epoxy resin formulations.

2. The use according to claim 1, in which R¹ is selected from hydrogen and C₁-C₄-alkyl, and R² is selected from C₁-C₄-alkyl, C₁-C₄-alkoxy-C₁-C₄-alkyl or R¹ and R² together are a C₄-C₆-alkylene group.

3. The use according to either of the preceding claims, in which R¹ and R² are each C₁-C₄-alkyl, more particularly methyl or ethyl.

4. The use according to any of the preceding claims, in which R³ and R⁴ are hydrogen.

5. The use according to any of the preceding claims, in which the compounds of the formula I are selected from:
4,4-diethyl-5-methylene-1,3-dioxolan-2-one,
4,4-dimethyl-5-methylene-1,3-dioxolan-2-one,
4-ethyl-5-methylene-1,3-dioxolan-2-one,
4-ethyl-4-methyl-5-methylene-1,3-dioxolan-2-one,
4-isopropyl-5-methylene-1,3-dioxolan-2-one,
4-isopropyl-4-methyl-5-methylene-1,3-dioxolan-2-one,
4-methylene-1,3-dioxaspiro[4.5]decan-2-one,
4-phenyl-4-methyl-5-methylene-1,3-dioxolan-2-one,
4-n-propyl-5-methylene-1,3-dioxolan-2-one,
4-n-propyl-4-methyl-5-methylene-1,3-dioxolan-2-one,
and mixtures thereof.

6. An epoxy resin composition comprising
a) at least one epoxy resin as component A and
b) at least one compound of the formula I according to any of the preceding claims as component B.

7. The epoxy resin composition according to claim 6, further comprising at least one conventional reactive diluent which is selected from among glycidyl ethers of aliphatic polyols having 2 to 8 C atoms, glycidyl ethers of unsaturated polyols having 2 to 8 C atoms, glycidyl ethers of cycloaliphatic polyols having 3 to 8 C atoms, and glycidyl ethers of aromatic polyols having 6 to 8 C atoms.

8. The epoxy resin composition according to claim 6 or 7, comprising at least one compound of the formula I in an amount of 0.1% to 50% by weight, based on the total weight of the composition.

9. The epoxy resin composition according to any of claims 6 to 8, in which component A is selected from polyglycidyl ethers of aromatic, aliphatic or cycloaliphatic polyols.

10. The epoxy resin composition according to any of claims 6 to 9, in which component A comprises at least one polyglycidyl ether of an aromatic polyol which is selected from the polyglycidyl ethers of bisphenol A, of bisphenol F, of novolaks, and mixtures thereof.

11. The epoxy resin composition according to any of claims 6 to 8, in which component A comprises at least one polyglycidyl ether of a cycloaliphatic polyol which is selected from the ring hydrogenation products of polyglycidyl ethers of bisphenol A, the ring hydrogenation products of polyglycidyl ethers of bisphenol F, the ring hydrogenation products of polyglycidyl ethers of novolaks, and mixtures thereof.

12. The use of an epoxy resin composition according to any of claims 6 to 11 as a binder constituent in coating materials, in casting compounds, for producing composite materials, or in structural adhesives.

13. The use of an epoxy resin composition according to any of claims 6 to 11 for impregnating fibers, or yarns or fabrics produced from fibers.

14. A method for curing an epoxy resin composition, comprising the reaction of an epoxy resin composition according to any of claims 6 to 11 with addition of at least one hardener.

15. A method for the coating of surfaces, comprising the application of an epoxy resin composition according to any of claims 6 to 11, optionally together with at least one hardener, to the surface to be coated.

## Revendications

1. Utilisation d'un composé de formule générale I 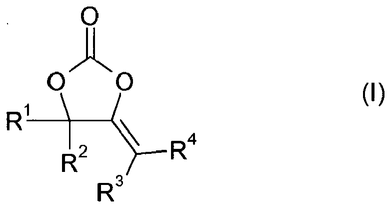 dans laquelle
R¹ et R² représentent, indépendamment l'un de l'autre, hydrogène, C₁-C₆-alkyle, C₁-C₄-alcoxy-C₁-C₄-alkyle, C₅-C₆-cycloalkyle, phényle, phényl-C₁-C₄-alkyle, C₂-C₆-alcényle ou C₂-C₆-alcynyle, ou R¹ et R² représentent, ensemble, un groupe C₃-C₁₁-alkylène ;
R³ et R⁴ représentent, indépendamment l'un de l'autre, hydrogène, C₁-C₆-alkyle, C₁-C₄-alcoxy-C₁-C₄-alkyle, C₅-C₆-cycloalkyle, phényle, phényl-C₁-C₄-alkyle, C₂-C₆-alcényle ou C₂-C₆-alcynyle, ou R³ et R⁴ représentent, ensemble, un groupe C₄-C₆-alkylène ;
ou leurs mélanges, dans des formulations de résine époxyde.

2. Utilisation selon la revendication 1, dans laquelle R¹ est choisi parmi hydrogène et C₁-C₄-alkyle, et R² est choisi parmi C₁-C₄-alkyle, C₁-C₄-alcoxy-C₁-C₄-alkyle ou R¹ et R² représentent, ensemble, un groupe C₄-C₆-alkylène.

3. Utilisation selon l'une quelconque des revendications précédentes, dans laquelle R¹ et R² représentent à chaque fois C₁-C₄-alkyle, en particulier méthyle ou éthyle.

4. Utilisation selon l'une quelconque des revendications précédentes, dans laquelle R³ et R4 représentent hydrogène.

5. Utilisation selon l'une quelconque des revendications précédentes, dans laquelle les composés de formule I sont choisis parmi :
la 4,4-diéthyl-5-méthylène-1,3-dioxolan-2-one,
la 4,4-diméthyl-5-méthylène-1,3-dioxolan-2-one,
la 4-éthyl-5-méthylène-1,3-dioxolan-2-one,
la 4-éthyl-4-méthyl-5-méthylène-1,3-dioxolan-2-one,
la 4-isopropyl-5-méthylène-1,3-dioxolan-2-one,
la 4-isopropyl-4-méthyl-5-méthylène-1,3-dioxolan-2-one,
la 4-méthylène-1,3-dioxaspiro[4,5]décan-2-one,
la 4-phényl-4-méthyl-5-méthylène-1,3-dioxolan-2-one,
la 4-n-propyl-5-méthylène-1,3-dioxolan-2-one,
la 4-n-propyl-4-méthyl-5-méthylène-1,3-dioxolan-2-one
et leurs mélanges.

6. Composition de résine époxyde, contenant
a) au moins un résine époxyde en tant que composant A et
b) au moins un composé de formule 1 selon l'une quelconque des revendications précédentes en tant que composant B.

7. Composition de résine époxyde selon la revendication 6, contenant en outre au moins un diluant réactif classique, qui est choisi parmi les glycidyléthers de polyols aliphatiques comprenant 2 à 8 atomes de carbone, les glycidyléthers de polyols insaturés comprenant 2 à 8 atomes de carbone, les glycidyléthers de polyols cycloaliphatiques comprenant 3 à 8 atomes de carbone et les glycidyléthers de polyols aromatiques comprenant 6 à 8 atomes de carbone.

8. Composition de résine époxyde selon la revendication 6 ou 7, contenant au moins un composé de formule I en une quantité de 0,1 à 50% en poids, par rapport au poids total de la composition.

9. Composition de résine époxyde selon l'une quelconque des revendications 6 à 8, le composant A étant choisi parmi les polyglycidyléthers de polyols aromatiques, aliphatiques ou cycloaliphatiques.

10. Composition de résine époxyde selon l'une quelconque des revendications 6 à 9, le composant A comprenant au moins un polyglycidyléther d'un polyol aromatique, qui est choisi parmi les polyglycidyléthers de bisphénol-A, de bisphénol-F, de novolaques et leurs mélanges.

11. Composition de résine époxyde selon l'une quelconque des revendications 6 à 8, dans laquelle le composant A comprend au moins un polyglycidyléther d'un polyol cycloaliphatique, qui est choisi parmi les produits d'hydrogénation du noyau de polyglycidyléthers du bisphénol-A, les produits d'hydrogénation du noyau de polyglycidyléthers du bisphénol-F, les produits d'hydrogénation du noyau de polyglycidyléthers de novolaques et leurs mélanges.

12. Utilisation de compositions de résine époxyde selon l'une quelconque des revendications 6 à 11, comme constituant de liant dans des agents de revêtement, des masses de coulage, pour la fabrication de matériaux composites ou dans des adhésifs structurés.

13. Utilisation d'une composition de résine époxyde selon l'une quelconque des revendications 6 à 11 pour l'imprégnation de fibres ou de fils ou de tissus fabriqués à partir de fibres.

14. Procédé pour le durcissement d'une composition de résine époxyde, comprenant la transformation d'une composition de résine époxyde selon l'une quelconque des revendications 6 à 11 avec addition d'au moins un durcisseur.

15. Procédé pour le revêtement de surfaces, comprenant l'application d'une composition de résine époxyde selon l'une quelconque des revendications 6 à 11, le cas échéant ensemble avec au moins un durcisseur, sur la surface à revêtir.
